# EUROPEAN PATENT SPECIFICATION

(11) **EP 3 949 522 B1**
(45) Date of publication and mention of the grant of the patent: **14.02.2024**
(21) Application number: 20718378.1
(22) Date of filing: 27.03.2020
(51) Int. Cl.: H04W 48/10, H04W 48/12, H04W 88/06

(54) **METHODS OF BROADCASTING PUBLIC AND NON-PUBLIC NETWORK LISTS AND RELATED NETWORK NODES AND WIRELESS DEVICES**
VERFAHREN ZUM SENDEN VON LISTEN ÖFFENTLICHER UND NICHTÖFFENTLICHER NETZWERKE UND ZUGEHÖRIGE NETZWERKKNOTEN UND DRAHTLOSE VORRICHTUNGEN
PROCÉDÉS DE DIFFUSION DE LISTES DE RÉSEAUX PUBLICS ET NON PUBLICS ET NOEUDS DE RÉSEAU ET DISPOSITIFS SANS FIL ASSOCIÉS

(30) Priority: 28.03.2019 US 201962825653 P; 11.07.2019 US 201962872770 P
(43) Date of publication of application: 09.02.2022
(73) Proprietor: Telefonaktiebolaget LM Ericsson (publ), 164 83 Stockholm (SE)
(72) Inventor: LINDHEIMER, Christofer, 592 31 VADSTENA (SE); BERGSTRÖM, Mattias, 192 70 SOLLENTUNA (SE); BUCHMAYER, Mats, 12047 Enskede Gard (SE); HEDMAN, Peter, 252 50 HELSINGBORG (SE); OHLSSON, Oscar, 167 33 BROMMA (SE); SCHLIWA-BERTLING, Paul, 585 71 LJUNGSBRO (SE); SEDLACEK, Ivo, 250 64 HOVORCOVICE (CZ); VESELY, Alexander, 8330 FELDBACH (AT)
(74) Representative: Ericsson
(86) International application number: PCT/IB2020/052966
(87) International publication number: WO 2020/194273

(56) References cited:
- QUALCOMM INCORPORATED ET AL: "TS 23.501: Introducing Non-public network", 3GPP DRAFT; S2-1902674_WAS_S2-1902101_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Santa Cruz - Tenerife, Spain; 20190225 - 20190301 28 February 2019 (2019-02-28), XP051611087, Retrieved from the Internet: URL:http://www.3gpp.org/ftp/tsg%5Fsa/WG2%5 FArch/TSGS2%5F131%5FTenerife/Docs/S2%2D190 2674%2Ezip [retrieved on 2019-02-28]
- ERICSSON: "RAN2-aspects of Non-Public Networks (NPN)", 3GPP DRAFT; R2-1900408 - RAN2 ASPECTS OF NON-PUBLIC NETWORKS (NPN), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Athens, Greece; 20190225 - 20190301 14 February 2019 (2019-02-14), XP051601802, Retrieved from the Internet: URL:http://www.3gpp.org/ftp/tsg%5Fran/WG2% 5FRL2/TSGR2%5F105/Docs/R2%2D1900408%2Ezip [retrieved on 2019-02-14]
- NOKIA ET AL: "Terminology correction for type-a/type-b to non-public network", 3GPP DRAFT; S2-1810432 TERMINOLOGY NON-PUBLIC NETWORK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dongguan, China; 9 October 2018 (2018-10-09), XP051539410, Retrieved from the Internet: URL:http://www.3gpp.org/ftp/tsg%5Fsa/WG2%5 FArch/TSGS2%5F129%5FDongguan/Docs/S2%2D181 0432%2Ezip [retrieved on 2018-10-09]
- INTEL CORPORATION: "RAN2 impact on Non-Public Network Deployment using SNPN", 3GPP DRAFT; R2-1900760 - NPN_SOLUTION1_V02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20190225 - 20190301 15 February 2019 (2019-02-15), XP051602135, Retrieved from the Internet: URL:http://www.3gpp.org/ftp/tsg%5Fran/WG2% 5FRL2/TSGR2%5F105/Docs/R2%2D1900760%2Ezip [retrieved on 2019-02-15]
- NOKIA ET AL: "Interim Conclusion proposal for KI#1, KI#2", 3GPP DRAFT; S2-1810434-V-LAN-KI#1-2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dongguan, China; 9 October 2018 (2018-10-09), XP051539412, Retrieved from the Internet: URL:http://www.3gpp.org/ftp/tsg%5Fsa/WG2%5 FArch/TSGS2%5F129%5FDongguan/Docs/S2%2D181 0434%2Ezip [retrieved on 2018-10-09]

## Description

### BACKGROUND

The present disclosure relates generally to communications, and more particularly to communication methods and related devices and nodes supporting wireless communications.

3GPP is currently working on specifications of what is commonly referred to as "5G".

In these efforts, various requirements are listed, and solutions are brought forward. For example, solutions exist for connecting a new radio access, commonly referred to as "NR" (New Radio) to a new core network, commonly referred to as 5G Core network or 5GC for short. The term "5G System", or 5GS may also be referred to, constituting a complete system, as in a 5G system, a 5GS.

The 5G system defined by 3GPP in Rel-15 includes both a new radio access (NR) and a new core network (5GC). The 5GC offers several new features such as support for network slicing, improved Quality of Service (QoS), and latency and battery optimizations in the form a new User Equipment (UE) state called inactive mode.

The 5G System may be known as a "public system", for example as a Public Land Mobile Network (PLMN). This may mean that anyone can get a subscription and access to the network. This, for example, is in contrast to some other networks that can only be accessed by specific UE's and for which it may not be possible to simply get a subscription/credential to access. One such example of a "private" network is a Wi-Fi Router deployed as an extension to a private broadband connection, e.g., a broadband subscription over fiber or xDSL or the like. For this, access may not be available to everyone. This may be a type of private network which may be referred to as a non-public network (NPN).

An NPN is a network intended for a limited group of users such as an enterprise and may typically provide service in a limited geographical area such as a factory floor or campus. One example of a use case is industrial/IIoT scenarios, although other use cases are not excluded.

Two different deployment models for non-public networks are supported in the 3GPP specifications: Public Network Integrated PLMN (PNI-NPN), and Standalone NPN (SNPN).

A PNI-NPN is made available via a PLMN by allocating one or more network slices to the non-public network. As network slicing may not enable the possibility to reduce/avoid UEs trying to access the network in areas in which the UE is not allowed to use the network slice, the usage of Closed Access Groups (CAGs) can be used in addition to network slicing to apply additional access control. In this case, the PNI-NPN may be identified by the combination of PLMN ID and CAG ID where the CAG ID is unique within the scope of the PLMN, or at least the cells to be used for the PNI-NPN are identified by the PLMN ID and CAG ID (i.e., the actual NPN may be identified by other means in dedicated signaling, e.g., Network Slice ID). Optionally, a human readable network name can also be provided to assist the user in case of manual CAG selection.

An SNPN may operate without dependency on a PLMN and may be identified by the combination of PLMN ID and a Network ID (NID). Unlike the PLMN ID used by a PLMN, the PLMN ID used by an SNPN is not required to be unique, i.e., it may be possible for two SNPNs to share the same PLMN ID. PLMN IDs reserved for use by private networks can be used for non-public networks, e.g., based on mobile country code (MCC) 999 assigned by ITU. The NID can be seen as an extension of the PLMN ID and may support two different assignment models:

Locally managed NIDs are assumed to be chosen individually by the SNPN at deployment time (and may therefore not be unique in all scenarios)

Universally managed NIDs are managed by a central entity per region and are assumed to be globally unique.

Similar to PNI-NPNs, a human readable network name can optionally be provided to assist the user in identifying an SNPN during manual network selection.

As can be seen from the discussion above, the identities used by PNI-NPN and SNPN may be similar. An SNPN may use PLMN ID + NID while a PNI-NPN may use PLMN ID + CAG ID. Another difference is that an SNPN may use a PLMN ID reserved for private use while a PNI-NPN may use the PLMN ID of its hosting PLMN, i.e., a public PLMN ID.

Network sharing may be a feature in 5G which allows multiple operators to share the same radio access network. To allow the UE to distinguish the operator networks, the PLMN IDs may be broadcasted in system information (more specifically in SIB 1, system information block 1). Unlike earlier generation systems, 5G may also allow each operator to broadcast their own Cell ID and Tracking Area Code (TAC) in SIB 1. One way to view this is that the physical cell is divided into several logical cells, one for each operator. For non-public networks, network sharing may be supported in a similar way by broadcasting multiple SNPN(s) (i.e., PLMN ID + NID) and/or PNI-NPN(s) (i.e. PLMN ID + CAG ID) identities in SIB 1.

To prevent regular UEs (i.e., UEs not supporting or not using non-public networks) from accessing non-public networks, it has been proposed to use the cellReservedForOtherUse indication in SIB1. As can be seen from the text below from Section 5.3.1 of TS 38.304 (also referred to as Reference [3]), presence of this indication may imply that the cell is barred for regular UEs and may cause the UE to select another cell. Hence, by allowing the NPN UE to ignore this indication, only NPN UEs may be allowed to camp on the cell.

### Cell status and cell reservations

Cell status and cell reservations are indicated in the MIB or SIB1 message as specified in TS 38.331 [3] by means of three fields:

cellBarred (IE type: "barred" or "not barred") Indicated in MIB message. In case of multiple PLMNs indicated in SIB1, this field is common for all PLMNs.

cellReservedForOperatorUse (IE type: "reserved" or "not reserved"). Indicated in SIB1 message. In case of multiple PLMNs indicated in SIB1, this field is specified per PLMN.

cellReservedForOtherUse (IE type: "true") Indicated in SIB1 message. In case of multiple PLMNs indicated in SIB1, this field is common for all PLMNs.

When cell status is indicated as "not barred" and "not reserved" for operator use and not "true" for other use, all UEs shall treat this cell as candidate during the cell selection and cell reselection procedures. When cell status is indicated as "true" for other use, the UE shall treat this cell as if cell status is "barred".

One drawback of the cellReservedForOtherUse indication may be that it may be common for all PLMN IDs broadcast in SIB1.

Document "TS 23.501: Introducing Non-public network", Qualcomm Incorporated et.al., 3GPP change request S2-1902674 may be construed to disclose a FS Vertical_LAN study to introduce support for non-public networks. It was proposed to introduce non-public networks based on the conclusions documented in TR 23.734.

Document "RAN2-aspects of Non-Public Networks (NPN)", Ericsson, 3GPP Tdoc R2-1900408 may be construed to disclose solutions for Non-Public Networks. The following observations were made. Observation 1: Changes to 38.304 related to SNPN can be made such that PLMN selection instead becomes PLMN/NPN-ID selection. Then, cell selection/reselection procedures does not need to change. Observation 2: UE's should include PLMN ID and NID in msg5 in an initial registration procedure. The following proposals were made. Proposal 1: Include in an LS response to SA2 (CT1, RAN3), that RAN2 expect further information on selection of MNC and uniqueness thereof, to judge whether further SIB optimization would be possible. Proposal 2: Include in an LS response to SA2 (CT1, RAN3), a request for clarification on if the locally managed NIDs can result in that the combination of MCC, MNC and NID is not necessarily uniquely identifying a specific Non-Public Network. Further ask SA2 to consider alternatives to broadcast HRN. One alternative is to store HRN-information together with allowed NID information in the UE. This does not guarantee that trial-error situations don't occur, but it avoids broadcast. Proposal 3: Include in an LS response to SA2 (CT1, RAN3), that RAN2 need further information on: A) If an NPN ID can be associated with a public PLMN ID, B) If, in the same cell, there can be an NPN ID that is associated with several PLMN ID, C) If, in the same cell, there can be several NPN ID's, each associated with different PLMN ID's. Proposal 4: Include in an LS response to SA2 (CT1, RAN3), that it is RAN2 view that AS actions related to cell selection/reselection are not impacted. Proposal 5: RAN2 should support separate Cell IDs and TAC's per MCC, MNC, NID combinations (corresponding to PLMN ID). Proposal 6: Include in an LS to RAN (SA2, CT1, RAN3) that RAN2 expect to handle necessary standardization to support SNPN without the need of an SI. Proposal 7: Include in an LS response to SA2 (CT1, RAN3), that RAN2 is interested in conclusions on if it shall be possible to broadcast a list of CAG identifiers per PLMN. Proposal 8: Include in an LS response to SA2 (CT1, RAN3) a request for clarification on if a CAG can be used to identify more than one NPN within a PLMN? If the answer to that is no, then RAN2 propose to remove HRN broadcast for CAG solutions and keep the mapping between a CAG ID for a PLMN to a HRN in the UE. Proposal 9: Include in an LS response to SA2 (CT1, RAN3), a request for clarification on FFS of combining CAG and network slice. Proposal 10: Include in an LS response to SA2 (CT1, RAN3), a request for clarification on if the CAG ID should, at any point in time be forwarded from UE AS to UE NAS, after a PLMN selection procedure or in connection to a PLMN selection procedure. Proposal 11: Feedback to SA2 that if CAG and non-CAG cells are put on the same frequency, traffic to respective cells may cause additional interference. RAN2 does not expect to work on optimizations for such situations. Proposal 12: RAN2 should discuss whether it is feasible to provide standardization support of a CAG solution without a separate SI/WI. Proposal 13: Include in an LS to RAN (SA2, CT1, RAN3) the conclusion of RAN2 discussion on whether there is a need for a WI or SI to proceed with standardization of a CAG solution.

Document "Terminology correction for type-a/type-b to non-public network", Nokia et.al., 3GPP draft S2-1810432 may be construed to disclose an evaluation on the terms 'type-a network' and 'type-b network' to be referred to as 'non-public' network. Using the terms 'type-a network' and 'type-b network' creates confusion and may give the impression that these are two fundamentally different types of networks that need to be specified separately, while in fact they are essentially the same, with one main difference: whether service continuity with a PLMN is possible (which is a matter of agreement between parties). To avoid any further confusion in downstream groups, it is proposed to use a single term to refer to this type of networks and where different options are envisaged, formulate them through explicit requirements. The service requirements can be clearly formulated to provide limitations/conditions when a feature such as service continuity is allowed. It is proposed to refer to this type of networks as "non-public networks", with the following definition: Non-public network: a network that is intended for non-public use.

Document "RAN2 impact on Non-Public Network Deployment using SNPN", Intel Corporation, 3GPP draft R2-1900760 may be construed to disclose an evaluation on wideband operation for NR-U. The following observations and proposal were made. Network Identification impact: Observation#1: For network identification: Include PLMN, List of NIDs and the human readable network name as part of the CellAccessRelatedInfo in SIB1. Network Selection impact: Observation#2: For network selection: the UE AS has to provide the following information to UE NAS upon reading the SIB during network selection. Observation#3: For initial registration, the UE NAS provides the UE AS with the selected PLMN ID and its corresponding NID and the UE RRC provides them to the NG RAN via LTE RRCConnectionSetupComplete/NR RRCSetupComplete message for AMF selection. Cell reselection impact: Observation#4: Cell reselection is as Rel-15 NR. Observation#5: Rel-15 cellReservedForOtherUse can be used to prevent UEs not supporting SNPNs from accessing the cell and IFRI can be used to decide whether to allow same frequency cell reselection. No additional impact Connected mode mobility impact. Observation#6: If there is/are dedicated frequency/frequencies for such SNPN cells, then the RRM measurement configuration can be configured appropriately for the UE registered to SNPN to ensure that only SNPN neighbour cells are reported. No further impact. Observation#7: If the frequency of the SNPN cells are shared with operator's public network, it may be useful to introduce PCI partitioning and/or whitelisting/blacklisting of cells to allow the network to know whether a neighbour cell reported is an SNPN cell or a non-SNPN cell and to prevent unnecessary reporting overhead from the NPN and non-NPN supporting UE. This can be further discussed. Other possible impact: Observation#8: Some other foreseeable RAN2 impact not including in the SA2 CR may be the extension of ASN.1 signalling for UAC and ANR, as well as discuss the use of SNPN cell as acceptable cell for emergency call. Proposal#1: The impact on Solution#1 (SNPN mode of operation) is small/manageable from RAN2 point of view and can thus be handled by RAN2 as part of Rel-16. Proposal#2: Inform RAN about the impact for Solution#1 (SNPN mode of operation) and RAN can decide how to proceed the work in RAN2 (new WI, existing WI (e.g. IIoT) or as TEI16)

### SUMMARY

According to the disclosure, there are provided methods, a base station, and a wireless device according to the independent claims. Further developments are set forth in the dependent claims.

In the description below, the embodiments relating to the network identifiers including a mobile country code, MCC, a mobile network code, MNC a control access group, CAG and a network identifier, NID, fall within the scope of the claims. All other passages referring to embodiments, disclosures, examples, aspects are to be understood as not falling within the scope of the claims but useful for understanding the invention. Some embodiments herein are directed to methods of operating a network node in a cell of a wireless communication network. Such methods include broadcasting, to a user equipment, UE, a first network list that includes multiple public network identifiers that correspond to public networks in the cell and broadcasting, to the UE, a second network list that includes multiple non-public network, NPN, identifiers that correspond to NPNs in the cell. In some embodiments, each of the public network identifiers and NPN identifiers includes multiple data fields. Some embodiments provide that the network identifiers include a mobile country code, MCC, a mobile network code, MNC and at least one of a control access group, CAG, and a network identifier, NID.

In some embodiments, the NPN includes a stand-alone private network, SNPN, that is deployed separately from a public land mobile network, PLMN.

In some embodiments, the NPN includes an integrated private network, PNI-NPN, that is integrated with a PLMN.

Some embodiments provide that a UE access stratum, AS, layer provides the MCC and the MNC for network selection corresponding to a detected PLMN. In some embodiments, the network identifier includes the PLMN and the NID responsive to a SNPN deployment.

In some embodiments, the network identifier includes the MMC, the MNC and a control access group, CAG, responsive to a PNI-NPN deployment. Some embodiments provide that the CAG includes a bit that indicates whether the network identifier identifies a SNPN or PNI-NPN.

In some embodiments, the UE AS layer includes the first network list and the second network. Some embodiments provide that the first network list includes a list of PLMN identifiers and NPN information that is broadcast by available cells and the second network list includes a list of PLMN identifiers of the network identifiers not broadcasting NPN identifiers.

In some embodiments, the MCC is set at a value of 999.

Some embodiments provide that a PLMN identifier is common to the SNPN and the PNI-NPN.

In some embodiments, the cell of the wireless communication network corresponds to a PLMN cell or one of a PNI-NPN cell or a SNPN cell. In some embodiments, a UE non-access stratum, NAS, layer includes information that distinguishes different NPN deployments from one another. Some embodiments provide that the UE NAS layer list of PLMNs includes identifiers of non-CAG and non SNPN cells from the UE AS layer.

In some embodiments, the network identifiers that are broadcast include MCC =999 and MNC to prevent legacy and non-NPN UEs from selecting the PLMN.

Some embodiments provide that a cellReservedForOtherUse function prevents legacy and non-NPN UEs from selecting the PLMN.

In some embodiments, the network identifiers include the MCC, the MNC and a NID that corresponds to an operator PLMN and NID/CAG that indicates that a PNI-NPN is available.

Some embodiments herein are directed to a base station (eNB) of a radio access network, wherein the base station is adapted to broadcast multiple network identifiers that each includes multiple data fields and that correspond to multiple non-public networks ,NPNs, to a user equipment, UE, in the cell. In some embodiments, the network identifiers include a mobile country code, MCC, and a mobile network code, MNC.

Some embodiments include performing operations described herein.

Some embodiments herein are directed to methods of operating a wireless device, UE, in a wireless communication network. Such methods include detecting broadcasted information from a network device. The broadcasted information includes a first network list that includes multiple public network identifiers that correspond to public networks in a cell and a second network list that includes multiple non-public network, NPN, identifiers that correspond to NPNs in the cell. Operations include reading system information corresponding to broadcasts from the network device and determining whether the cell corresponding to the broadcasted information is available for access by the UE.

In some embodiments, the UE is not NPN capable, a UE AS layer is configured to report network identifiers to a UE NAS layer for identified networks, and the UE is configured to receive a selected network identifier from the UE NAS layer.

In some embodiments, responsive to the MCC being 999, a corresponding network is not selected.

Some embodiments provide that the UE is NPN capable and a UE AS layer is configured to report network identifiers to a UE NAS layer for identified networks.

In some embodiments, the network identifiers include: MCC and MNC for PLMNs, MCC, MNC and NID for SNPNs and/or MCC, MNC and CAG for PNI-NPNs.

Some embodiments provide that the UE is configured to receive a selected network identifier from the UE NAS layer.

In some embodiments, the UE is NPN capable, a UE AS layer is configured to report network identifiers to a UE NAS layer for identified networks, the MCC value comprises 999, and the UE NAS ignores networks corresponding to MCC value of 999.

Some embodiments include performing, by a UE AS, a search to identify available networks and reporting the available networks to a UE NAS.

Some embodiments are directed to a first wireless device (UE) that includes a transceiver configured to provide wireless network communication with a wireless communication network and a processor coupled with the transceiver, wherein the processor is configured to provide wireless network communication through the transceiver, and wherein the processor is configured to perform operations according to embodiments disclosed herein.

Some embodiments are directed to a base station (eNB) of a wireless communication network that includes a transceiver configured to provide wireless network communication with a wireless terminal and a processor coupled with the transceiver, wherein the processor is configured to provide wireless network communications through the transceiver, and wherein the processor is configured to perform operations according to embodiments disclosed herein.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a schematic diagram illustrating stand alone and non-stand alone deployment options disclosed herein;
Figure 2 is a flow chart illustrating operations according to some embodiments herein;
Figure 3 is a block diagram illustrating a wireless device UE according to some embodiments of inventive concepts;
Figure 4 is a block diagram illustrating a radio access network RAN node (e.g., a base station eNB/gNB) according to some embodiments of inventive concepts;
Figure 5 is a block diagram illustrating a core network CN node (e.g., an AMF node, an SMF node, etc.) according to some embodiments of inventive concepts;
Figure 6 is a flow chart illustrating operations according to some embodiments of inventive concepts;
Figure 7 is a flow chart illustrating operations according to some embodiments of inventive concepts;
Figure 8 is a flow chart illustrating operations according to some embodiments of inventive concepts;
Figure 9 is a flow chart illustrating operations according to some embodiments of inventive concepts;
Figure 10 is a flow chart illustrating operations according to some embodiments of inventive concepts;
Figure 11 is a flow chart illustrating operations according to some embodiments of inventive concepts;
Figure 12 is a flow chart illustrating operations according to some embodiments of inventive concepts;
Figure 13 is a flow chart illustrating operations according to some embodiments of inventive concepts;
Figure 14 illustrates a system information block SIB according to some embodiments of inventive concepts;
Figure 15 illustrates a non-public network NPN information element according to some embodiments of inventive concepts;
Figure 16 illustrates an NPN identity information list information element according to some embodiments of inventive concepts;
Figure 17 illustrates a PLMN identity information element according to some embodiments of inventive concepts;
Figure 18 is a flow chart illustrating radio access network operations according to some embodiments of inventive concepts; and
Figure 19 is a flow chart illustrating wireless device operations according to some embodiments of inventive concepts.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

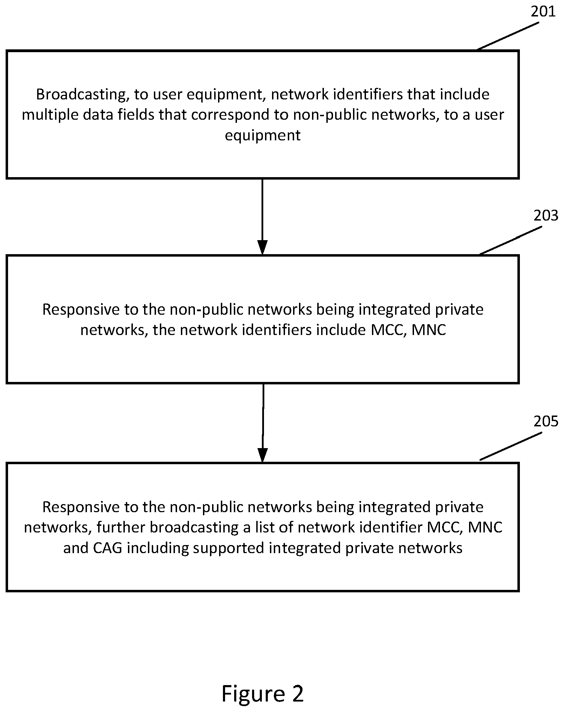

Reference is now made to Figure 2, which is a flow chart illustrating operations according to some embodiments herein. Operations include broadcasting network identifiers that include multiple data fields that correspond to non-public networks, to a user equipment (block 201). In response to the non-public networks being integrated private networks, the network identifiers include MCC and MNC (block 203). In response to the non-public networks being integrated private networks, operations further include broadcasting a list of network identifiers including MCC, MNC and CAG including supported integrated private networks (block 205).

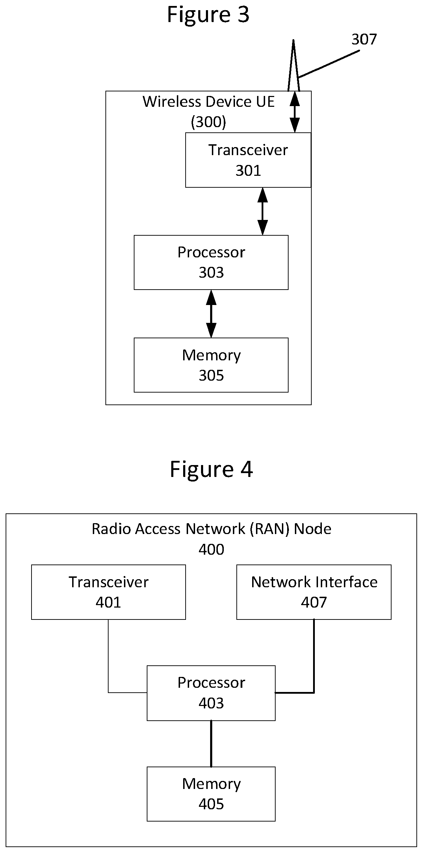

Figure 3 is a block diagram illustrating elements of a wireless device UE 300 (also referred to as a mobile terminal, a mobile communication terminal, a wireless communication device, a wireless terminal, mobile device, a wireless communication terminal, user equipment, UE, a user equipment node/terminal/device, etc.) configured to provide wireless communication according to embodiments of inventive concepts. As shown, wireless device UE may include an antenna 307, and transceiver circuitry 301 (also referred to as a transceiver) including a transmitter and a receiver configured to provide uplink and downlink radio communications with a base station(s) (e.g., also referred to as a RAN node) of a radio access network. Wireless device UE may also include processing circuitry 303 (also referred to as a processor, e.g., corresponding to processing circuitry coupled to the transceiver circuitry, and memory circuitry 305 (also referred to as memory, e.g., corresponding to device readable medium) coupled to the processing circuitry. The memory circuitry 305 may include computer readable program code that when executed by the processing circuitry 303 causes the processing circuitry to perform operations according to embodiments disclosed herein. According to other embodiments, processing circuitry 303 may be defined to include memory so that separate memory circuitry is not required. Wireless device UE may also include an interface (such as a user interface) coupled with processing circuitry 303, and/or wireless device UE may be incorporated in a vehicle.

As discussed herein, operations of wireless device UE may be performed by processing circuitry 303 and/or transceiver circuitry 301. For example, processing circuitry 303 may control transceiver circuitry 301 to transmit communications through transceiver circuitry 301 over a radio interface to a radio access network node (also referred to as a base station) and/or to receive communications through transceiver circuitry 301 from a RAN node over a radio interface. Moreover, modules may be stored in memory circuitry 305, and these modules may provide instructions so that when instructions of a module are executed by processing circuitry 303, processing circuitry 303 performs respective operations (e.g., operations discussed below with respect to Example Embodiments relating to wireless devices).

Figure 4 is a block diagram illustrating elements of a radio access network RAN node 400 (also referred to as a network node, base station, eNodeB/eNB, gNodeB/gNB, etc.) of a Radio Access Network (RAN) configured to provide cellular communication according to embodiments of inventive concepts. As shown, the RAN node may include transceiver circuitry 401 (also referred to as a transceiver, e.g., corresponding to portions of interface including a transmitter and a receiver configured to provide uplink and downlink radio communications with mobile terminals. The RAN node may include network interface circuitry 407 (also referred to as a network interface configured to provide communications with other nodes (e.g., with other base stations) of the RAN and/or core network CN. The network node may also include processing circuitry 403 (also referred to as a processor coupled to the transceiver circuitry, and memory circuitry 405 (also referred to as memory) coupled to the processing circuitry. The memory circuitry 405 may include computer readable program code that when executed by the processing circuitry 403 causes the processing circuitry to perform operations according to embodiments disclosed herein. According to other embodiments, processing circuitry 403 may be defined to include memory so that a separate memory circuitry is not required.

As discussed herein, operations of the RAN node may be performed by processing circuitry 403, network interface 407, and/or transceiver 401. For example, processing circuitry 403 may control transceiver 401 to transmit downlink communications through transceiver 401 over a radio interface to one or more mobile terminals UEs and/or to receive uplink communications through transceiver 401 from one or more mobile terminals UEs over a radio interface. Similarly, processing circuitry 403 may control network interface 407 to transmit communications through network interface 407 to one or more other network nodes and/or to receive communications through network interface from one or more other network nodes. Moreover, modules may be stored in memory 405, and these modules may provide instructions so that when instructions of a module are executed by processing circuitry 403, processing circuitry 403 performs respective operations (e.g., operations discussed below with respect to Example Embodiments relating to RAN nodes).

According to some other embodiments, a network node may be implemented as a core network CN node without a transceiver. In such embodiments, transmission to a wireless device UE may be initiated by the network node so that transmission to the wireless device is provided through a network node including a transceiver (e.g., through a base station or RAN node). According to embodiments where the network node is a RAN node including a transceiver, initiating transmission may include transmitting through the transceiver.

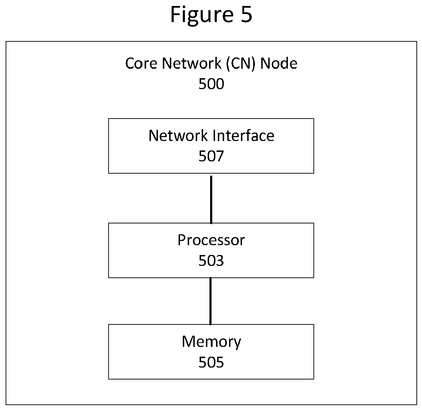

Figure 5 is a block diagram illustrating elements of a core network CN node (e.g., an SMF node, an AMF node, etc.) of a communication network configured to provide cellular communication according to embodiments of inventive concepts. As shown, the CN node may include network interface circuitry 507 (also referred to as a network interface) configured to provide communications with other nodes of the core network and/or the radio access network RAN. The CN node may also include a processing circuitry 503 (also referred to as a processor) coupled to the network interface circuitry, and memory circuitry 505 (also referred to as memory) coupled to the processing circuitry. The memory circuitry 505 may include computer readable program code that when executed by the processing circuitry 503 causes the processing circuitry to perform operations according to embodiments disclosed herein. According to other embodiments, processing circuitry 503 may be defined to include memory so that a separate memory circuitry is not required.

As discussed herein, operations of the CN node may be performed by processing circuitry 503 and/or network interface circuitry 507. For example, processing circuitry 503 may control network interface circuitry 507 to transmit communications through network interface circuitry 507 to one or more other network nodes and/or to receive communications through network interface circuitry from one or more other network nodes. Moreover, modules may be stored in memory 505, and these modules may provide instructions so that when instructions of a module are executed by processing circuitry 503, processing circuitry 503 performs respective operations (e.g., operations discussed below with respect to Example Embodiments relating to core network nodes).

The present inventive concept relates to the deployment of non-public networks by partially reusing solutions and protocols for public networks.

While WLAN is a different access than 5G, recent activities have been related to providing the possibility for deploying these NPN's also using 5G access and 5G core networks. Embodiments may not be directed as much to a home Wi-Fi access point, but instead may be directed to deployments of NPNs in commercial and/or industrial contexts, such as factories. In this manner, it may be possible to connect factory equipment, vehicles and/or employees. These types of deployments may have different requirements regarding, for example, security. It may be important that roaming is functional in some cases to seamlessly transfer a connection from within the private network to a network that is public. In some embodiments, other cases provide that roaming should explicitly not be supported. One such example includes machinery that is connected should preferably only work in the private network and thus not be able to connect through any other access point/cell and/or gNB.

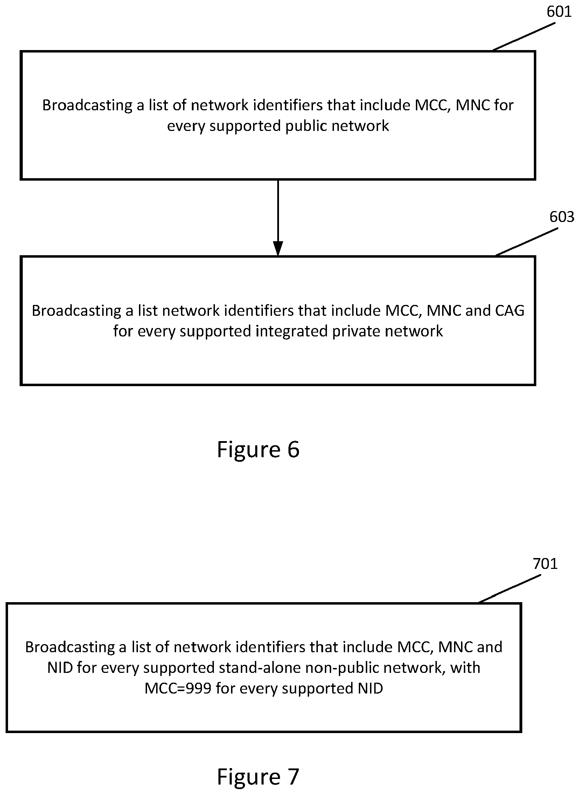

Reference is now made to Figures 6 - 13, which are block diagrams illustrating operations according to some embodiments. Referring to Figure 6, operations of operating a network node in a cell of a wireless communication network may include broadcasting a list of network identifiers that include MCC and/or MNC for every supported network (block 601). Embodiments may further include broadcasting a list of identifiers that include MCC, MNC and CAG for every supported integrated private network (block 603). Referring to Figure 7, operations may include broadcasting a list of network identifiers that include MCC, MNC and NID for every supported stand-alone non-public network, with MCC=999 for every supported NID.

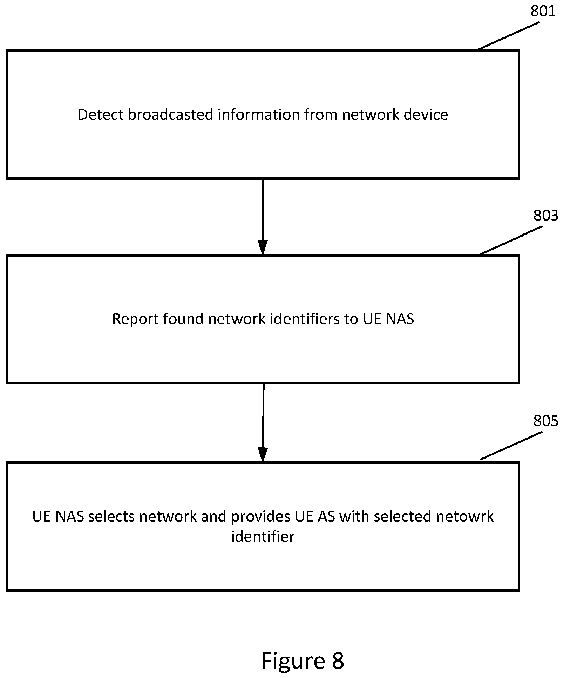

Referring to Figure 8, operations may include detecting broadcasted information from a network device (block 801). Operations may include reporting found network identifiers to the UE NAS (block 803). In some embodiments, the UE NAS selects the network and provides the UE AS with a selected network identifier (805). In some embodiments, the UE is configured to receive a selected network identifier from the UE NAS layer.

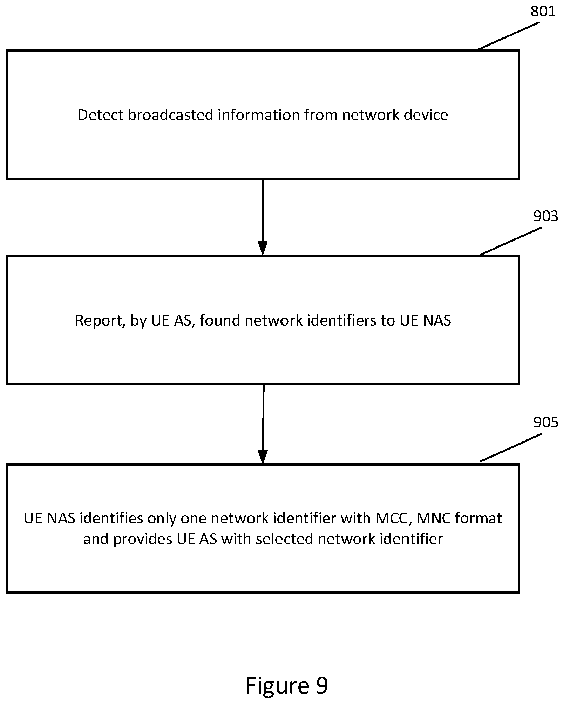

Referring to Figure 9, in addition to detecting broadcasted information from a network device (block 801), operations may further include reporting, by the UE AS, found network identifiers to UE NAS (block 903). Responsive to the UE NAS identifying only one network identifier with MCC, MNC format, the UE AS is provided with the selected network identifier (block 905). In some embodiments, responsive to the MCC being 999, a corresponding network is not selected.

Some embodiments provide that the network identifiers include MCC and MNC for PLMNs, MCC, MNC and NID for SNPNs and/or MCC, MNC and CAG for PNI-NPNs. Some embodiments provide that the UE is configured to receive a selected network identifier from the UE NAS layer.

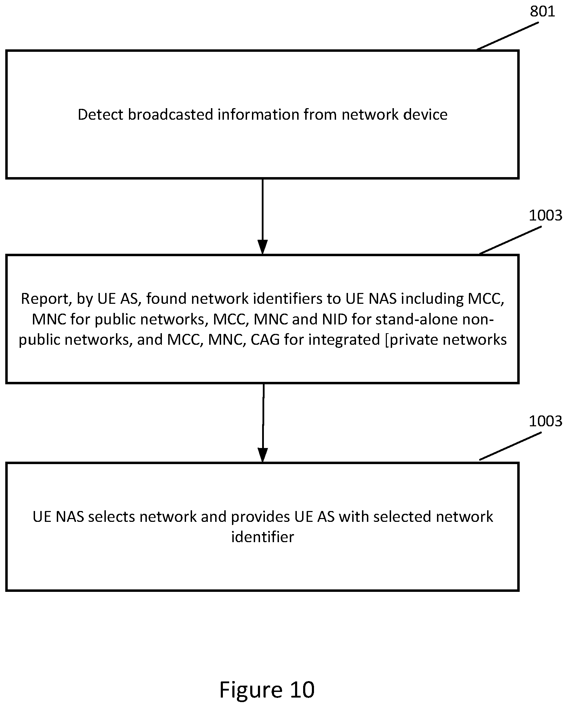

Referring to Figure 10, in addition to detecting broadcasted information from a network device (block 801), operations include, reporting, by UE AS, found network identifiers to the UE NAS including MCC, MNC and NID for stand-alone non-public networks, and MCC, MNC and CAG for integrated networks (block 1003). In some embodiments, the UE NAS selects the network and provides UE AS with the selected network identifier (block 1005).

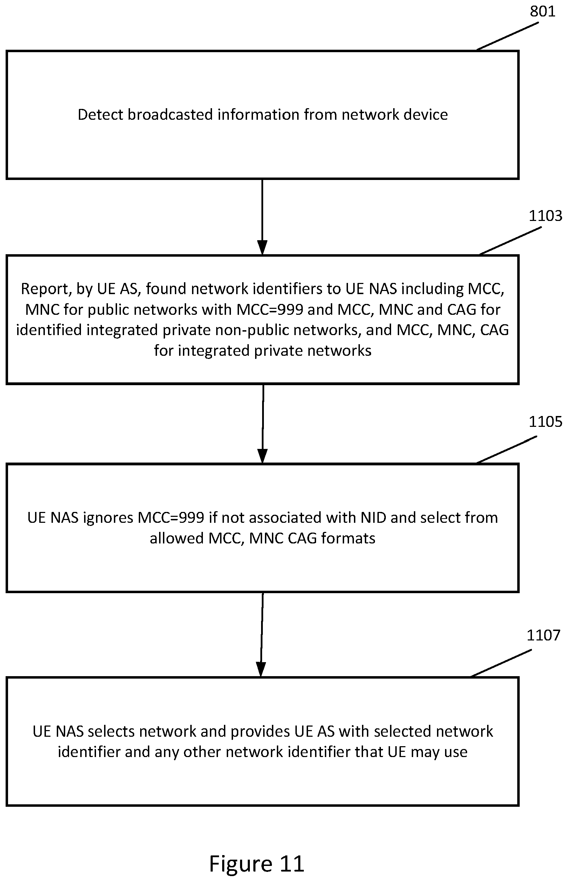

Referring to Figure 11, in addition to detecting broadcasted information from a network device (block 801), operations include reporting, by the UE AS, found network identifiers to the UE NAS including MCC, MNC for public networks with MCC=999 and MCC, MNC and CAG for integrated private networks (block 1103). Some embodiments provide that the UE AS reports found network identifiers to the UE NAS including MCC and MNC for public networks with MCC=999 and MCC, MNC and CAG for identified integrated private non-public networks, and MCC, MNC and CAG for integrated private networks (block 1103).

Some embodiments provide that UE AS ignores MCC=999 if the UE is not associated with NID and may select from allowed MCC, MNC and CAG formats (block 1105). In some embodiments, the UE NAS selects the network and provides the UE AS with a selected network identifier that the UE may use (block 1107).

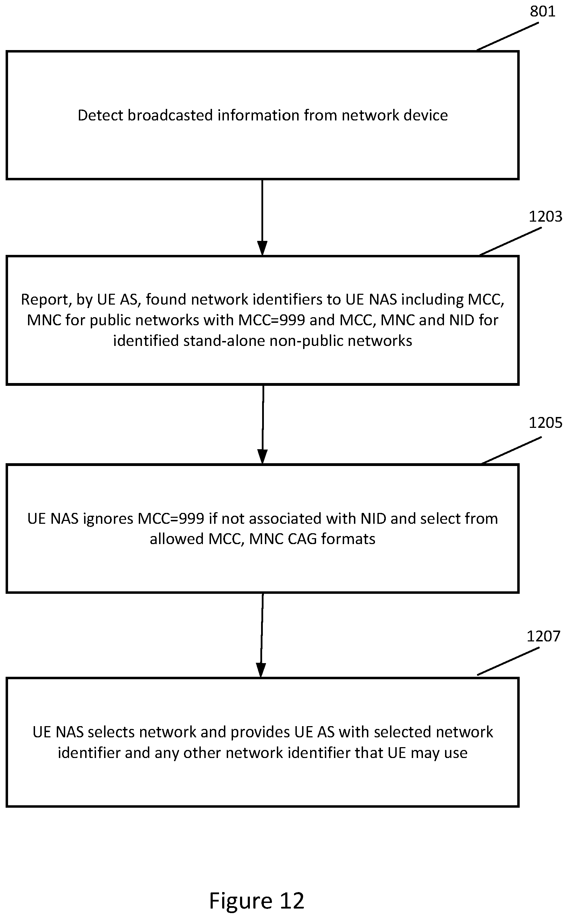

Referring to Figure 12, in addition to detecting broadcasted information from a network device (block 801), operations include reporting, by the UE AS, found network identifiers to the UE NAS including MCC and MNC for public networks with MCC=999 and MCC, MNC and NID for identified stand-alone non-public networks (block 1203). Operations further include, ignoring, but the UE NAS MCC=999 if its not associated with a NID and selects from allowed MCC, MNC and CAG formats (block 1205). In some embodiments, the UE NAS selects the network and provides UE AS with the selected network identifier and any other identifier that the network UE may use (block 1207).

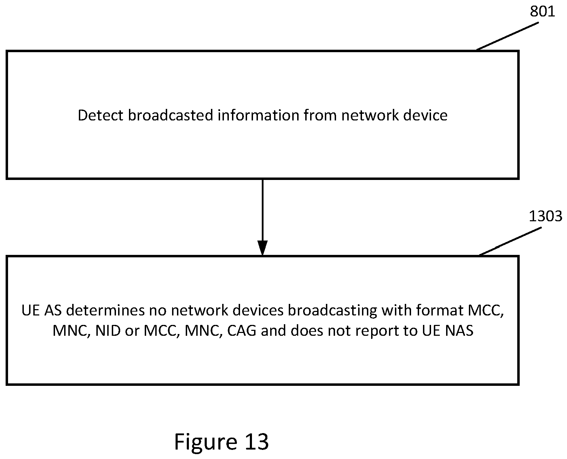

Referring to Figure 13, in addition to detecting broadcasted information from a network device (block 801), operations include the UE AS determining that no network devices are broadcasting with the formats MCC, MNC, and NID or MCC, MNC and CAG and does not report to the UE NAS (block 1303).

3GPP has set forth requirements for how the NPN's should work and studies have been performed on how to meet such requirements. The requirements are described in a 3GPP document 22.261 (v16.6.0) and are provided as follows:

Non-public networks are intended for the sole use of a private entity such as an enterprise, and may be deployed in a variety of configurations, utilizing virtual and/or physical elements. Specifically, NPNs may be deployed as completely standalone networks, they may be hosted by a PLMN, and/or they may be offered as a slice of a PLMN.

In any of these deployment options, unauthorized UEs, those that are not associated with the enterprise, will not attempt to access the non-public network, which could result in resources being used to reject that UE and thereby not be available for the UEs of the enterprise. It is also expected that UEs of the enterprise will not attempt to access a network they are not authorized to access. For example, some enterprise UEs may be restricted to only access the non-public network of the enterprise, even if PLMN coverage is available in the same geographic area. Other enterprise UEs may be able to access both a non-public network and a PLMN where specifically allowed.

### 6.25.2 Requirements

The 5G system shall support non-public networks.

The 5G system shall support non-public networks that provide coverage within a specific geographic area.

The 5G system shall support both physical and virtual non-public networks.

The 5G system shall support standalone operation of a non-public network, i.e. a non-public network may be able to operate without dependency on a PLMN.

Subject to an agreement between the operators and service providers, operator policies and the regional or national regulatory requirements, the 5G system shall support for non-public network subscribers: access to subscribed PLMN services via the non-public network; seamless service continuity for subscribed PLMN services between a non-public network and a PLMN; access to selected non-public network services via a PLMN; and seamless service continuity for non-public network services between a non-public network and a PLMN.

A non-public network subscriber to access a PLMN service shall have a service subscription using 3GPP identifiers and credentials provided or accepted by a PLMN.

The 5G system shall support a mechanism for a UE to identify and select a non-public network. Different network selection mechanisms may be used for physical vs virtual non-public networks.

The 5G system shall support identifiers for a large number of non-public networks to minimize collision likelihood between assigned identifiers.

The 5G system shall support a mechanism to prevent a UE with a subscription to a non-public network from automatically selecting and attaching to a PLMN or non-public network it is not authorized to select.

The 5G system shall support a mechanism to prevent a UE with a subscription to a PLMN from automatically selecting and attaching to a non-public network it is not authorized to select.

The 5G system shall support a change of host of a non-public network from one PLMN to another PLMN without changing the network selection information stored in the UEs of the non-public network.

Based on the requirements, embodiments disclosed herein may provide approaches for addressing two different deployment scenarios. The first deployment scenario includes that in which a private network, NPN, is deployed as a stand-alone network. This scenario may be referred to as SNPN.

The second scenario includes that in which a private network, NPN, is deployed as a non-stand-alone network. In such cases, the NPN is integrated with a public network, a PLMN, but may have nodes and/or cells that are for exclusive use by the private network users/subscribers. In some embodiments, the nodes may be shared, but certain resources may be dedicated to the private network in certain cells. The latter may include an extension of the slicing concept (e.g., as described in 23.501). This NPN-type may be referred to as PNI-NPN, Public Network-Integrated NPN.

Two approaches may be used for these two deployment options. For example, for an NPN with a stand-alone (SNPN) deployment, an NID solution may be used. For an NPN public network integrated (PNI-NPN) deployment, a CAG solution may be used.

Principles corresponding to the SNPN/NID approach include: combination of a PLMN ID and Network identifier (NID) identifies an SNPN; NID may be globally unique or locally managed; NG-RAN node supports broadcasting a total of twelve NIDs; optionally a human-readable network name per NID for manual selection; optionally cell broadcast information to prevent UEs not supporting SNPNs from accessing the cell; when the UE is set to operate in SNPN access mode the UE only selects and registers with SNPNs; UE provides PLMN ID and NID as selected PLMN and NG-RAN provides PLMN ID and NID as selected PLMN to 5GC; AMF performs access control and rejects a UE if the UE has no subscription for an SNPN; and UAC information is configured per non-public network.

Some characteristics of the SNPN/NID approach provide that voice support with emergency services in SNPN access mode may not be specified in a current release. The NID may be used together with a PLMN ID during network selection and may therefore be seen as an extension to the network identity (PLMN ID). This may be determined from the statement "UEs operating in SNPN access mode only select cells and networks broadcasting both PLMN ID and NID of the selected SNPN."

Principles corresponding to the PNI-NPN/CAG approach include:
- Existing functionalities e.g. network slicing is used to deploy NPN within a public network;
- In addition, for the purpose of access control, Closed Access

Groups may be used as follows:
   - CAG cell broadcasts one or multiple CAG Identifiers per PLMN (assumed NG-RAN node supports broadcasting a total of twelve CAG Identifiers) and optionally a human-readable network name per CAG Identifier
   - PLMN/Network selection is done using the PLMN ID and within the selected PLMN the allowed cells are derived using the Allowed CAG list and optional an indication whether the UE only is allowed to access CAG cells; The cell selection/reselection is then performed using the CAG information and the knowledge of whether the UE is provisioned with the CAG access only indication, then cell selection can also perform cell (re)selection to a non-CAG non-SNPN cell of the selected PLMN-ID.
   - As there may be multiple CAG Identifiers per PLMN ID, the UE provides the selected CAG Identifier to the NG-RAN, and NG-RAN provides the CAG Identifier to AMF over N2;
   - The Mobility Restrictions (for UE in NAS and NG-RAN over N2) is extended with the Allowed CAG list and the indication whether the UE only is allowed to access CAG cells; and
   - CAG cell shall broadcast information such that only UEs supporting CAG are accessing the cell (i.e. cells are either CAG cells or normal PLMN cells).
Some characteristics of the solution is that it:
   - Allows PLMN operator to manage its network and used identities without the need for external registration as CAG is defined within the scope of the PLMN ID
   - FFS whether Emergency services are to be supported in a CAG cell.

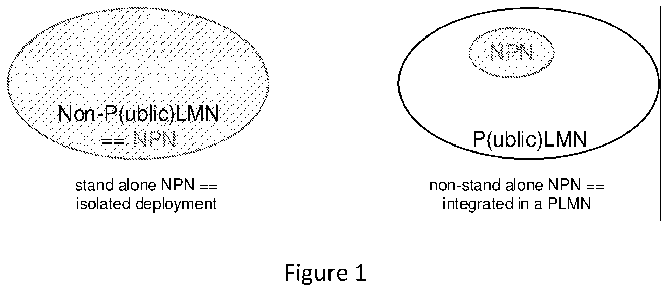

Some embodiments herein provide an approach that is independent of deployment. As such, the requirements may be the same regardless of the deployment. For example, the PNI-NPN may be treated in the same way as SNPN, at least on RAN level. For example, brief reference is made to Figure 1, which is a schematic diagram illustrating stand alone and non-stand-alone deployment options disclosed herein. Approaches supporting the two deployment options (SNPN and PNI-NPN respectively) based on two different deployment scenarios are provided. Figure 1 illustrates the two deployment options mainly from a radio infrastructure point of view. While in the stand-alone option, radio resources and network equipment are owned by the NPN operator, and in the non-stand-alone NPN option, radio resources and network equipment may be operated by a PLMN operator. The stand-alone NPN may be regarded as PLMN with non-public access rights only, realized in an isolated deployment, i.e. without sharing any infrastructure with a P(ublic)LMN. A non-stand-alone NPN shares certain infrastructure equipment. Note, that more than one NPN may be hosted by a certain deployment.

The requirements particularly point out that it should be possible to have many non-public networks. This may be solved by a non-public-network identification range.

The requirements provide that it should be possible to prevent UEs that are not authorized to non-public networks from automatically selecting and attaching to such networks. This may be the same requirement that already exists for public networks, with the possible exception of emergency call handling. Further, subscribers to a non-public network should not automatically select and attach to a PLMN, or another non-public network it is not authorized in.

Regarding the change of host of a non-public network from one PLMN to another one, without changing the network selection information stored in the UEs, which should be independent from a chosen deployment, an internationally operating enterprise deployment and host could be different in different regions, etc. This aspect may call for a unified approach for both deployment options, both on Access Stratum and Non-Access Stratum level.

Requirements may provide that it should be possible to access services via PLMNs and to support seamless service continuity. This may generally apply to tunneling services subscribed to in one network through another network. Such requirements may be deployment-independent.

The requirements further address selection and the UE should be able to identify and select a non-public network. While the requirements open for different solutions dependent on physical or virtual non-public networks, such properties do not mandate different solutions. From the above short analysis, requirements may be very similar regardless of deployment option.

In some embodiments, requirements for NPN do not differ between the SNPN and the PNI-NPN deployments. For example, two approaches, one for each deployment option as described above, PNI-NPN and SNPN respectively, are provided.

Such approaches may include the PNI-NPN (aka CAG ID) approach, which has been specified by 23.501 CR in [4] and 23.502 CR in [5]. The principles of the approach include:
- Existing functionalities e.g. network slicing are used to deploy NPN within a public network;
- For the purpose of access control, Closed Access Groups may be used as follows:
- CAG cell broadcasts one or multiple CAG Identifiers per PLMN (assumed NG-RAN node supports broadcasting a total of twelve CAG Identifiers) and optionally a human-readable network name per CAG Identifier;
- PLMN/Network selection is done using the PLMN ID and within the selected PLMN the allowed cells are derived using the Allowed CAG list and optional an indication whether the UE only is allowed to access CAG cells;
- As there may be multiple CAG Identifiers per PLMN ID, the UE provides the selected CAG Identifier to the NG-RAN, and NG-RAN provides the CAG Identifier to AMF over N2;
- The Mobility Restrictions (for UE in NAS and NG-RAN over N2) is extended with the Allowed CAG list and the indication whether the UE only is allowed to access CAG cells; and
- CAG cell shall broadcast information such that only UEs supporting CAG are accessing the cell (i.e. cells are either CAG cells or normal PLMN cells).
Some characteristics of the approach provide that it:
- Allows a PLMN operator to manage its network and used identities without the need for external registration as CAG is defined within the scope of the PLMN ID; and
- FFS whether Emergency services are to be supported in a CAG cell.

Such approaches may also include the SNPN approach, which has been specified by 23.501 CR in[2] and 23.502 CR in [3]. The principles of the SNPN approach provide that:
- Combination of a PLMN ID and Network identifier (NID) identifies an SNPN;
- NID may be globally unique or locally managed;
- NG-RAN node supports broadcasting a total of twelve NIDs;
- Optionally a human-readable network name per NID for manual selection;
- Optionally cell broadcast information to prevent UEs not supporting SNPNs from accessing the cell;
- When the UE is set to operate in SNPN access mode the UE only selects and registers with SNPNs;
- UE provides PLMN ID and NID as selected PLMN and NG-RAN provides PLMN ID and NID as selected PLMN to 5GC;
- AMF performs access control and rejects a UE if the UE has no subscription for an SNPN;
- UAC information is configured per non-public network.

Some characteristics of the approach provide voice support with emergency services in SNPN access mode is not specified in this release.

The NID is used together with a PLMN ID during network selection and is therefore seen as an extension to the network identity i.e. PLMN ID. For example, UEs operating in SNPN access mode may only select cells and networks broadcasting both PLMN ID and NID of the selected SNPN.

Regarding both the stand-alone and non-stand-alone (i.e. now called Public Network Integrated - PNI) approaches, both solutions can be realized by one set of Access Stratum functions, whereas the differentiation is rather made on NAS (if at all). Thus, at least from a RAN perspective, it is good to further assess if the different deployment options can be handled with one and the same solution.

From the above requirements and short description of approaches, the following NAS functions may be determined:
NPN Identification:
   - SNPN:
      PLMN ID+NID (non-public network Identification) (covering the case of MCC=999), allocation of NID is managed either locally or universally
   - PNI-NPN w CAG ID:
      CAG (Closed Access Group), uniquely allocated in a PLMN.
NPN Selection:
   - SNPN:
      UE, at Initial registration, selected PLMN+NID is provided to NG-RAN which provides it to the proper AMF
   - PNI-NPN w CAG ID:
      Normal PLMN selection, but with a restriction
   - to CAG cells broadcasting a CAG-ID associated with a PLMN ID, which are part of Allowed CAG List of the UE and,
   - to non-CAG cells, unless the UE is provisioned with the CAG access only indication.

As multiple CAGs in broadcast can be supported, the UE may select a CAG, which may be communicated to RAN/AMF (see [4]).

UE configuration and subscription aspects for SNPN provide that only UEs in SNPN access mode select and register with SNPNs. UEs not in SNPN access mode do not select and register with SNPNs. Note that UE's in SNPN access mode can also access P(ublic)LMN's, if it also has credentials or is authorized for such access.

UE configuration and subscription aspects for PNI-NPN w CAG ID provide that the UE is configured with CAG related information using UE Config Update procedure (23.502 §4.2.4.2). The UE may be configured to access 5GS only via CAG cells or be allowed to access both normal PLMN cells and CAG cells.

Examples of functions comprise:
Broadcast:
   - SNPN:
      One or multiple PLMN IDs, with one or multiple NIDs per PLMN.
      Additional information, if needed, to prevent UEs from attempting access to SNPNs
      Human Readable Name
   - PNI-NPN w CAG ID:
      One or multiple PLMN IDs with one or multiple ([x2] suggests up to 12 in total for an NG-RAN node) CAG indication + CAG ID per PLMN ID.
      According to [3], cells are either CAG cells or "normal" PLMN cells. i.e. exclusive use of cell (resources) by non-SNPNs.
Cell (re)selection:
   - SNPN:
      UE only selects cell broadcasting PLMN+NID of selected SNPN
   - PNI-NPN w CAG ID:
      UE is restricted to:
      - CAG cells broadcasting the selected CAG-ID and the selected PLMN-ID; and
      - non-CAG cells of the selected PLMN-ID, unless the UE is provisioned with the CAG access only indication.
Mobility Control:
   - SNPN:
      In case of multiple NID broadcast, along respective information in the mobility restriction list.
   - PNI-NPN w CAG ID:
      Along respective information in the mobility restriction list.

Embodiment 2 provides an overlap for AS functions between the SNPN solution and the PNI-NPN w CAG ID solution:
- broadcast information is similar, i.e., CAG and NID may be defined with one common broadcast identifier;
- exclusive use of cell resources for NPNs, both for SNPN and PNI-NPN deployments; and
- mobility control: provision of respective information in the mobility restriction list does not need to be different.

Further, deployment of NPNs also in the PNI-NPN-case is isolated as in SNPN from AS perspective. For example, subscribers that have only PLMN subscriptions w/o access to NPNs shall not access radio resources reserved for NPN use only. The requirements don't differ between the deployments.

Embodiment 3 provides that from a radio deployment point-of-view, PNI-NPNs are as isolated as SNPN's. For example, cells are either for NPN use or for public use.

Assignment of Tracking Area Codes to PNI-NPN cells can either follow geographical/deployment considerations from normal PLMN cells or, if found more appropriate, be associated to separate Tracking Areas. This will depend on the required interaction between PNI-NPN and the PLMN part of the overall network. One could even think of allocating NPN specific PLMN IDs to configure an NPN PLMN within a public network. This would have the advantage that the solutions for doing this are already in place.

Embodiment 4 provides that for PNI-NPN's, operators can choose to either associate NPN cells with "publicly" assigned TACs or configure specific PNI-NPN TACs.

From the above we don't see it as obvious that approaches would be needed based on deployment options.

Embodiment 5 provides that, from an Access Stratum point of view, there is not a need for two different approaches for SNPN and PNI-NPN. For example, both options are deployment variants only and may be addressed with a single approach.

NAS/Core network aspects of a merged solution provide that:
- SNPN is used when the UE is configured in "SNPN access mode". In this case, SNPN (PLMN ID + NID) selection takes place.
- CAG is used when the UE is NOT configured in "SNPN access mode". In this case, regular PLMN selection and CAG-ID selection takes place.

From a UE NAS point of view though, it seems that both solutions (for SNPN and for PNI NPN) require a very similar support from UE AS layer:
- UE AS layer needs to provide input for "network selection" as usual, although;

o For detected Public Networks, UE AS needs to provide MCC, MNC
o For detected non-Public Network-SNPN, UE AS needs to provide MCC, MNC, NID
o For detected non-Public Network -PNI-NPN, UE AS needs to provide MCC, MNC, CAG ID

With the above view, it would be possible to keep the selection aspects on "network" selection level. The "network" selection should be understood in the same way as we know "PLMN selection", but since now, there is a possibility for a UE that is capable of accessing Non-Public Networks, to implement a "Network Selection" in NAS that includes both regular PLMNs and different types of NPN's. Thus, the treatment from a selection perspective does not need to be different for the different NPN types. If there is a need to distinguish between the NPN types on NAS layer, it is possible to do this (e.g., by being able to differentiate identifier NID/CAG) without implementing different selection mechanisms.

Embodiment 6 provides that UE NAS uses very similar information for all types of "PLMN" selection. In the case of a UE capable of accessing an NPN, it may be advantageous to consider "network selection" on UE NAS layer as there may be different types of networks (and deployments) to select between.

By being able to distinguish different NPN-deployments on NAS layer, e.g., the AMF uses one bit to determine whether the remaining bits of the NPN-specific info (NID/CAG) contain the NID or the CAG ID. AMF can then perform specific authorization and mobility restrictions.

In some aspects of the present invention and from NAS point of view, both approaches (for SNPN and for PNI NPN) may require the following support from AS layer:
- AS layer providing input for PLMN/SNPN selection consisting of providing a list of <PLMN-ID, NID or CAG-ID> as broadcast by available cells. For NPI NPN, the NAS layer also need AS layer to provide the usual list of PLMN IDs of non-CAG non-SNPN cells.
- AS layer performing cell (re)selection with the selected PLMN-ID and (selected NID or selected CAG). For NPI NPN, unless the UE is provisioned with the CAG access only indication, AS layer can also perform cell (re)selection to a non-CAG non-SNPN cell of the selected PLMN-ID.
From NAS point of view, it does not matter whether AS layer provides and uses NID and CAG-ID using (a) two separate AS layer parameters, or (b) using a single AS layer parameter NPN-info:
- structure of which is transparent for AS layer; and
- which can be decoded in NAS layer to either NID or CAG-ID, e.g. by the AS layer parameter NPN-info containing one bit to distinguish NID and CAG ID, and remaining bits would contain the NID or the CAG ID depending of the first bit.

In the latter case, i.e. when using the AS layer parameter NPN-info:
- for PLMN/SNPN selection:
- AS layer provides input for PLMN/SNPN selection consisting of providing a list of <PLMN-ID, NPN-info> as broadcast by available cells and a list of PLMN-IDs of cells not broadcasting the AS layer parameter NPN-info for the PLMN
- NAS layer uses the information which NAS needs. - i.e.
- when the NAS layer is configured in "SNPN access mode", the NAS layer uses only the <PLMN-ID, NPN-info> entries where NPN-info contains a NID.
- when the NAS layer is NOT configured in "SNPN access mode", the NAS layer uses only the <PLMN-ID, NPN-info> entries where NPN-info contains a CAG-ID and also, unless configured with the CAG access only indication, the list of PLMN-IDs of cells not broadcasting the AS layer parameter NPN-info for the PLMN.
- for cell (re)selection
- NAS layer provides AS layer with information as follows:
- when the NAS layer is configured in "SNPN access mode", the NAS layer provides the AS layer with the selected PLMN-ID and selected NPN-info, where the NPN-info contains the selected NID. In case the NAS has been configured to allow more than one NID, then the NAS provides the additional NIDs to AS in the ePLMNs list (or similar list if a new is created) with "PLMN-ID and NPN-info" for each entry and AS uses the ePLMNs list as specified.
- when the NAS layer is NOT configured in "SNPN access mode", and the NAS layer selects a PLMN ID and selects a CAG-ID, the NAS layer provides the AS layer with the selected PLMN-ID and selected NPN-info, where the NPN-info contains the selected CAG-ID. Futhermore, if the UE NOT provisioned with the CAG access only indication, if the UE selects a PLMN ID and a CAG-ID, the NAS layer would provide AS layer with an equivalent PLMN containing the selected PLMN-ID only and, in case the NAS is configured with an Allowed CAG list, additional entries in the equivalent PLMNs list (or similar list if a new is created) are populated with the entries of the Allowed CAG list (i.e. each entry that has not been set as selected PLMN is added in the list of Equivalent PLMNs with PLMN-ID and the CAG Identity as NPN-info).
- AS layer performs the cell (re)selection within among the cells which broadcast the selected PLMN ID and selected NPN-info parameter, and the equivalent PLMN (if provided).

Further, 5GC aspects related to N2 are the following:
- Authorization of selected NID or CAG-ID
- NG-RAN can provide the selected PLMN and NPN-info, and the AMF uses one bit to determine whether the remaining bits of the NPN-info would contain the NID or the CAG ID. AMF then performs authorization as specified.
- Mobility restriction:
   - AMF provides the Mobility Restriction List by extending the PLMN Identity (e.g. added as a new IE type) with NPN-info to the NG-RAN (the NPN-info contains the same structure with a bit differentiating whether it is a CAG-ID or NID as to maintain consistency to what is in SIB information and what is in Xn/NG SETUP).
   - In case of PNI-NPN and the UE is assigned an Allowed CAG list, then the AMF populates the Equivalent PLMNs (or similar list if a new is created) with the entries of the Allowed CAG list (i.e. each entry that has not been set as Serving PLMN is added in the list of Equivalent PLMNs with PLMN ID and the CAG Identity as NPN-info).
   - In case of SNPN, if the UE is allowed to use more than one NID, then the AMF provides the additional NIDs to NG-RAN in the ePLMNs list (or similar list if a new is created) with "PLMN-ID and NPN-info" for each entry and NG-RAN uses the ePLMNs list as specified.

Radio network aspects of a merged solution.

As described above, on a high level it looks very much like the two approaches (NID and CAG-based) for the two different deployment options SNPN and PNI-NPN are very similar. Indeed, broadcast information is, even though it is named differently, similar too.

| Comparison of broadcast information SNPN w. NID and PNI-NPN w CAG | | |
|---|---|---|
| **PNI-NPN w. CAG sol.** | **SNPN (w NID)** | **Comparison** |
| CAG indication | PLMN ID | Both these elements (in combination with the ID below) identify that a cell is an NPN cell. |
| cell Reserved ForOtherUse | cellReservedForOtherUse | In both cases to prevent non-supporting UEs from accessing the cell |
| CAG ID | NPN-ID | Both these elements identify a specific NPN |
| HRN | HRN | (Optional) Same for both solutions |

In the following the difference between the two approaches is discussed in the modelling in the UE of the PLMN vs cell selection and reselection.

### Network selection and cell re/selection

For the NID case and SNPN deployments, we interpret that the selection of the NPN is solely a task for the network selection procedures that are controlled by the UE NAS portion, and standardized by CT1. The UE NAS will select a network in which there are only allowed cells for an NPN UE and it will efficiently keep away UEs that are only allowed to access other networks. Note that the term "network" is to be understood as either a public network or a non-public, and even with different deployments, if such distinguishing is desired, see above.

For the CAG case and for PNI-NPN deployments, one reason there were different approaches was that the selection of the NPN is a task for both the former PLMN selection and cell selection procedures. The UE AS may then need to implement functionality to receive a CAG limitation indication (in addition to a network indication) from the UE NAS, and to only select cells that have the CAG ID dictated by the UE NAS, or alternatively not, dependent on UEs being allowed to access also other cells.

In both cases, the result may be the same, but the modelling in the UE will be different and essentially force two separate approaches. The resulting behavior from a UE (having a combined NAS + AS view) is that it sometimes needs to be restricted to NPN cells, and that NPN cells should efficiently keep non-authorized users away. This is true for both cases and a single approach should be enough. Hus, according to embodiments herein, the selection mechanisms may not need to be different and, in the case of PNI-NPN, split over both "network selection" and cell re/selection.

Embodiment 7 provides that there is not a reason for the selection mechanisms to be different for the SNPN deployment and for the PNI-NPN-deployment.

For the SNPN deployments, it may be beneficial to define a new network and treat that network in much the same way as any PLMN. This makes it possible to reuse mechanisms that are defined for any PLMN, such as, for example, registration areas, equivalent network definitions, access to services through other networks, etc. From a RAN perspective, the main change may be to allow broadcast of a network identification as MCC, MNC, NID, instead of just MCC, MNC, as it is today.

However, as the requirements seem to be the same irrespective of deployment, the necessary standardization may be largely already done if we use the same mechanisms also for PNI-NPNs. This may mean that, also in the PNI-NPN-case, an NPN can be identified with a MCC, MNC, NID(or CAG). However, in such case, it would be the MCC and the MNC of the Public network in which the NPN is integrated.

We note that if we allow a NID(or CAG) to be combined with a public PLMN ID, i.e., an MCC + MNC of a public PLMN, it may not need to be as long as in the case the NID is combined with the MCC =999, as the "triplet" of MCC, MNC and NID would be unique through its MCC, MNC part and the NID would be possible to control and set by the public network operator. However, this difference alone may render different specifications of different approaches as unnecessary.

Embodiment 8 provides that if a NID together with a (public) PLMN ID is used also in the PNI-NPN case, it may not have to be as long as the NID in the SNPN case, e.g., from a uniqueness perspective. However, this factor alone does not appear to justify a separate approach. If the P(ublic)LMN ID is used as part of the identifier, the NID will be locally unique within the PLMN.

If, from a RAN perspective, the NID is used as a common term for approaches that are associated with both SNPN deployments and PNI-NPN deployments, then it may still be possible to differentiate it on network level.

One potential challenge with using the PLMN ID + NID (from SNPN solution) also in the PNI-NPN case, with a public PLMN MCC and MNC and is how to prevent non-authorized UE's stay away, in particular from gNB's that only support NPN-cells. If a valid public PLMN is broadcast, legacy and new P(ublic)LMN UE's would recognize this and see a valid PLMN if it is broadcast in the same way as today. Thus, embodiments herein provide that NPN's can have a separate list in broadcast, or at least in one way or another be distinguished such that all UEs that are not NPN-UE's will not recognize these "network IDs" as valid PLMN ID's. However, there may be a for a PLMN ID and by broadcasting a PLMN ID that a legacy or P(ublic)LMN UE will never select, e.g., MCC=999, the desired effect of keeping all Non-NPN UE's away may be achieved. For example, in a PNI-NPN-only gNB; broadcast the following:
Network ID 1: Broadcast MCC=999 + MNC to have legacy and non-NPN-UE's not select this PLMN.
Network ID 2: Broadcast MCC+MNC + NID = Operator PLMN + NID/CAG (controlled by Operator) to indicate to NPN UE's that there is a PNI-NPN available for selection with the ID formed by the triplet MCC, MNC, NID/CAG. This Network ID 2 format should be coded such that it is not understood by non-NPN-UE's.

Both these network ID's should be viewed as and treated as a "PLMN" that was handled in earlier releases. This means that it should be possible to configure, e.g,. cell ID's and TACs separately if desired. The listing of the new network ID's i.e., the elements containing MCC, MNC, NID would need new formats.

Thus, in one aspect of the present invention, a NPN-capable UE that detects broadcast information from a gNB that (only) support a PNI-NPN cell will first find a Network ID 1, with broadcast MCC 999, but it will not find an associated NID. This UE will thus continue to read the system information and find Network ID 2 (possibly at a different format) and then the UE would match the NPN identity with the iNPN identities it is allowed to access and conclude whether Network ID 2 is a candidate for access. See details of how this can be signaled in the following section named "Signaling options to only admit NPN-UEs".

In this aspect of the present invention a UE that is not capable of NPN communication will not be able to detect or not configured to decode the Network ID's that are formed by the MCC-MNC-NID/CAG triplet, and thus, it will only detect Network ID 1. This network ID, if coded with MCC=999, will not correspond to any public PLMN, as MCC = 999 is reserved for non-public use. The UE that is not capable of NPN will thus not attempt access to a gNB that only is broadcasting information stating MCC=999 as the only MCC on the public PLMN list format.

In this aspect of the present invention, the broadcast of this PLMN ID, including MCC = 999, is an efficient method to fulfil the requirement that UE's that are not allowed to access anything but public PLMN's should not attempt access. This makes it possible to have a generic solution of how to identify a network, irrespective of deployment.

| **Network types** | **Network deployments** | **Network ID** |
|---|---|---|
| Public Network | Public Network | MCC, MNC |
| Non-Public Network | Stand-Alone Private Network | MCC, MNC, NID |
| Non-Public Network | PNI-NPN | MCC, MNC, NID/CAG* |

| | | |
|---|---|---|
| * CAG, may be used to support different identifier names/lengths based on deployments, otherwise NID will work for both. | | |

The procedures in the UE and network would then be:
- gNB Broadcast available network ID's. These network ID's can be associated with different Cell ID's and TACs (or not);
- On request from UE NAS, UE AS performs a search for available networks and report them to UE NAS;
- Once the UE NAS has selected a network, the cell selection procedure shall be performed in order to select a suitable cell of that network to camp on;
- In idle/inactive mode, the UE will re-select cells in TA's listed in the CN Registration Area (which can include TA's with different Network ID's) without performing Registration area update due to mobility; and
- The UE may also re-select cells belonging to "equivalent Networks" that are not included in any TA in the CN registration area, but that would then trigger a Registration Area update procedure.

In some embodiments, the NAS and CN may use an extended NID solution to address both PNI-NPN and SNPN deployment scenarios. In such case, the solution principle is similar to what has been described above with the following differences:
- The CAG Identities are not used, and instead the PLMN-ID and NID is used with NID preferably being in the locally managed range;
- The Allowed CAG list is not used, instead the subscription information and the UE can be configured with a list of NIDs (or list of "PLMN-ID and NID") allowed to be used by the UE;
- The NPN-info used towards the NG-RAN is the NID;
- The NAS layer list(s) used for network selection and/or PLMN selection is extended or new lists created, and they can be populated with NIDs (or with "PLMN-ID and NID"); and
- There is no need for separate SNPN access mode, instead the UE/user selects "user" (e.g. persona or user identity) to use which implies a set of credentials to be used and the corresponding list of network identities e.g. NAS layer list(s) used for network selection and/or PLMN selection.

### Signaling options to only admit NPN-UEs:

A method according to some embodiments provides that, when using a particular PLMN, the network would make sure that non-NPN UEs are not accessing an NPN by indicating a special PLMN associated with that NPN. The special PLMN may for example have MCC = 999. The special PLMN may be signaled by the network/cells, which non-NPN UEs should avoid, but which NPN-UEs should attempt to access, or at least consider as a valid PLMN. Note that a UE of NPN A would, if it detects a cell of NPN B (which according to this method would have PLMN with MCC = 999), consider the PLMN to be valid. But, the NPN itself would not be valid since the UE of NPN A would not consider NPN B to be valid.

The operator can, if this method is applied, configure only NPN UEs to consider this special PLMN as a valid PLMN, while other UEs would not be configured to consider the special PLMN as valid and would therefore refrain from accessing a network/cell which advertises this special PLMN.

Below is an ASN.1 example showing how this can be implemented in 3GPP TS 38.331 v15.4.0. The added parts to implement this method are shown with underlined and highlighted text. What is added is an NPN-ID list. However, as described, the method may rely on that the PLMN-field, i.e. plmn-IdentityList (which actually is a list which can contain L.maxPLMN number of entries) is set to the special PLMN. Note that it would be possible that there is only a single npn-Identity per PLMN-IdentityInfo rather than a list.

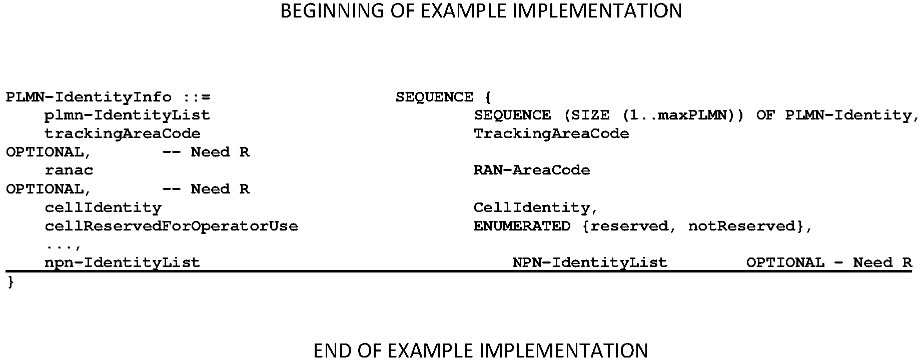

A method according to some other embodiments in which NPNs are added in new list only comprehended by new UEs includes the network advertising NPN IDs in a list which is only comprehended by UEs supporting NPN. An ASN.1 example showing how this can be implemented in 3GPP TS 38.331 v15.4.0 is provided below. The added parts to implement this method are shown with underlined and highlighted text. What is added is a new list of PLMNs named plmn-IdentityList-r16 (compared to the old plmn-IdentityList without suffix). This new list has entries of the type PLMN-IdentityInfo-r16 (compared to the old PLMN-IdentityInfo without suffix). The new type PLMN-IdentityInfo-r16 can include NPN IDs. The operator would then, if it wants only NPN-UEs to access a certain cell place the PLMN and NID of the network in the new list. Legacy UEs would not comprehend this new list and hence would not consider the cell as valid.

The new list can have 0 to maxPLMN number of entries (maxPLMN is a constant which is 12 according to 3GPP TS 38.331 v15.4.0) hence this list can be empty. Note that it may not be possible to have the legacy list (plmn-IdentityList) empty. The network may therefore place a dummy PLMN in this list, e.g. a PLMN having MCC = 999, or another PLMN which the UEs would not consider valid. Note that it may be possible that there is only a single npn-Identity per PLMN-IdentityInfo rather than a list (i.e. plmn-IdentityList-r16).

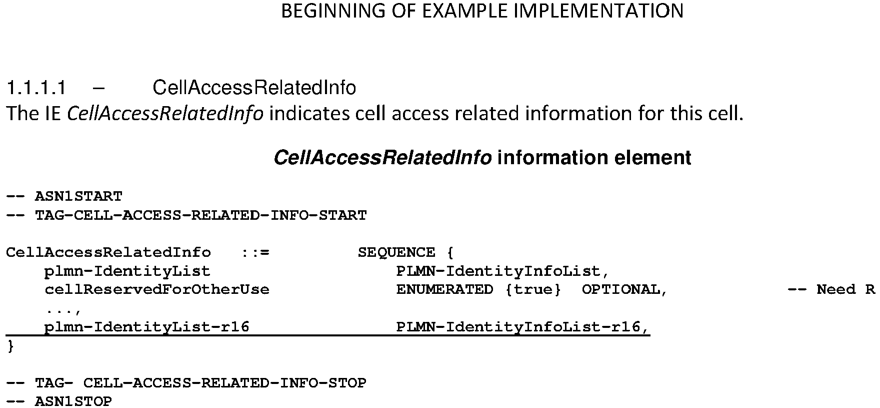

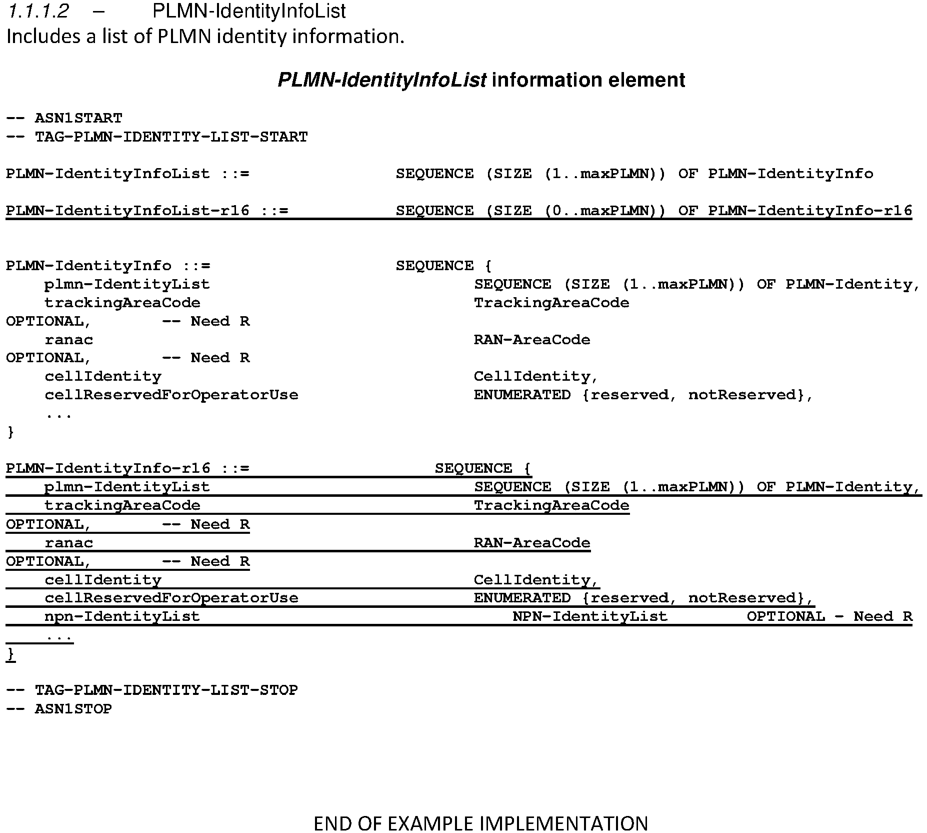

Operations of the wireless device 300 (implemented using the structure of the block diagram of Figure 3) will now be discussed with reference to the flow chart of Figure _ according to some embodiments of inventive concepts. For example, modules may be stored in memory 305 of Figure 3, and these modules may provide instructions so that when the instructions of a module are executed by respective wireless device processing circuitry 303, processing circuitry 303 performs respective operations disclosed herein.

Various operations from the flow charts of all of Figures 1-13 may be optional with respect to some embodiments of wireless devices and related methods.

Operations of a RAN node 400 (implemented using the structure of Figure 4) will now be discussed with reference to the flow charts herein according to some embodiments of inventive concepts. For example, modules may be stored in memory 405 of Figure 4, and these modules may provide instructions so that when the instructions of a module are executed by respective RAN node processing circuitry 403, processing circuitry 403 performs respective operations of the flow chart.

Operations of a Core Network CN node 500 (implemented using the structure of Figure 5) will now be discussed with reference to flow charts herein according to some embodiments of inventive concepts. For example, modules may be stored in memory 505 of Figure 5, and these modules may provide instructions so that when the instructions of a module are executed by respective CN node processing circuitry 503, processing circuitry 503 performs respective operations of the flow chart.

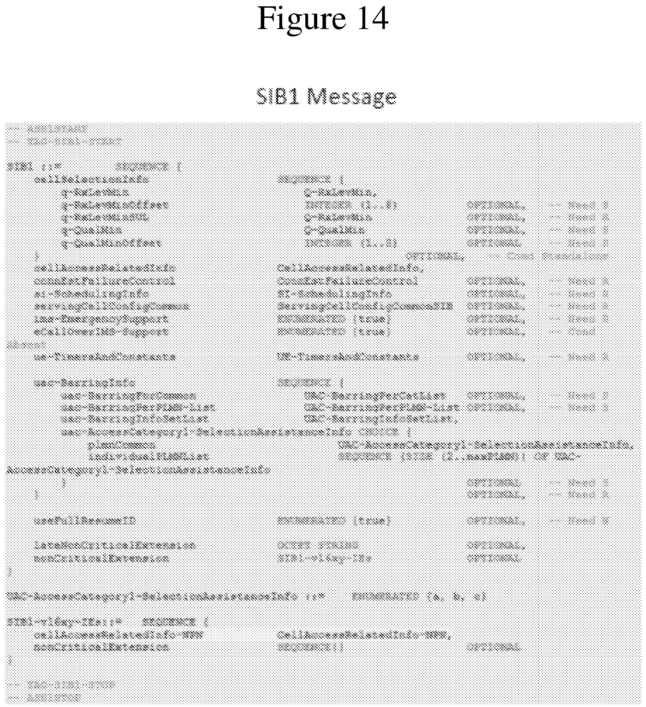

Reference is now made to Figure 14, which illustrates a system information block SIB according to some embodiments of inventive concepts. Figure 1 shows that the SIB 1 message may include information relevant when evaluating if a UE is allowed to access a cell and defines the scheduling of other system information. SIB1 of Figure 14 may also include radio resource configuration information that is common for all UEs and barring information applied to the unified access control. As shown, the SIB 1 message may include cellAccessRelatedInfo-NPN. In this example, SIB1 may be extended with a new field cellAccessRelatedInfo-NPN as shown in Figure 14, which in turn includes the non-public network list as well as a non-public network specific version of the cellReservedForOtherUse indication.

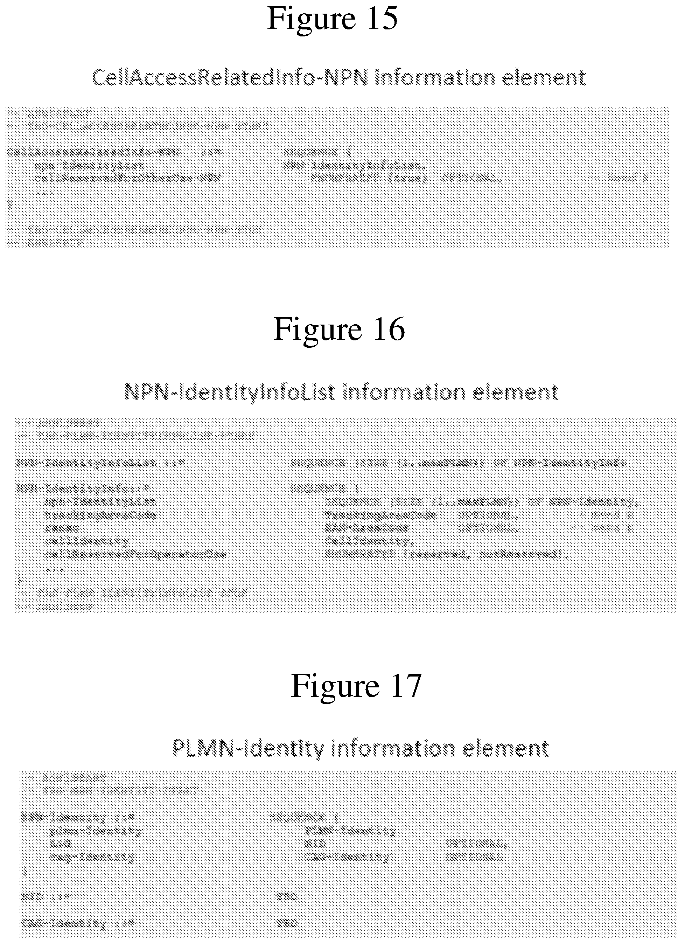

Reference is now made to Figure 15 illustrates a non-public network NPN information element according to some embodiments of inventive concepts. Figure 15 shows that the IE CellAccessRelatedInfo-NPN information element of Figure 14 indicates cell access related information for this cell for NPN UEs as shown in Figure 15, including npn-IdentityList and cellReservedForOtherUse-NPN information elements.

Reference is now made to Figure 16, which shows that the NPN-IdentityInfoList information element (shown as npn-IdentityList in Figure 15) may include a list of NPN identity information, including: npn-IdentityList, trackingAreaCode, ranac, cellIdentity, and cellReservedForOperatorUse. Each entry in the non-public network list may include the identity of the non-public network and other network information such as Cell ID, TAC, RAN area code, and a cellReservedForOperatorUse indication as shown in Figure 16. Similar to the public (legacy) PLMN list included in the cellAccessRelatedInfo field in SIB 1, it may also be possible to group non-public networks that share the same network information so that the network information only has to be signaled once for the grouped networks.

Reference is now made to Figure 17, which illustrates a PLMN identity information element according to some embodiments of inventive concepts. Figure 17 shows that the NPN-Identity information element of Figure 3 may identify a Non-Public Network (e.g., using a plmn-identity and one or both of a nid and/or a CAG-ID). Further information regarding how to set the IE may be specified in TS 23.003. As used in the present disclosure, the term cell can have multiple interpretations. In some cases, the term cell may refer to the "physical cell," i.e., an entity broadcasting a set of MIB/SIBs and associated with a physical cell id (e.g., the Physical Cell ID (PCI) used by NR cells). For example, a certain cell may broadcast an SIB in which multiple PLMNs are indicated, and these PLMNs are then all considered to be the same cell, even if there are multiple PLMNs and Cell IDs within this cell. Another interpretation of the term cell is that if there are multiple PLMNs/Cell IDs in a SIB, then each of these are considered as different logical cells. When the term cell is used in this document, it will typically be clear from the context if it is the physical or logical cell that is referred to.

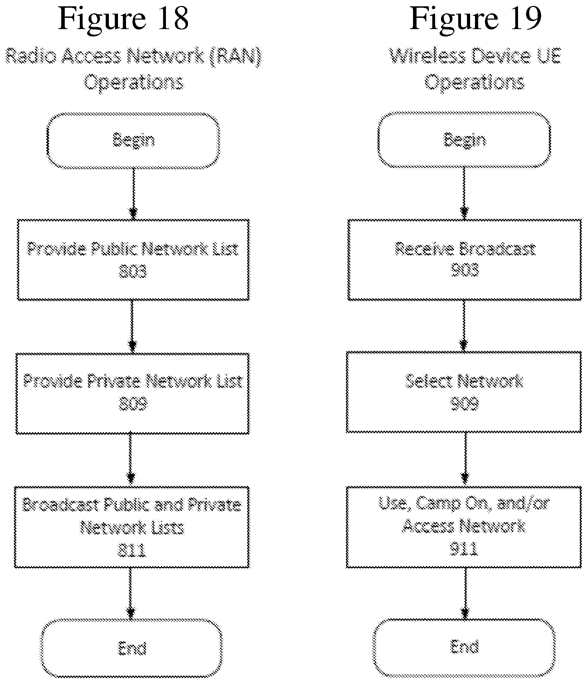

Figure 18 is a flow chart illustrating radio access network operations according to some embodiments of inventive concepts. Operations of a RAN node 400 (implemented using the structure of Figure 6) will now be discussed with reference to the flow chart of Figure 8 according to some embodiments of inventive concepts. For example, modules may be stored in memory 405 of Figure 4, and these modules may provide instructions so that when the instructions of a module are executed by respective RAN node processing circuitry 403, processing circuitry 403 performs respective operations of the flow chart.

At block 803, processing circuitry 403 (also referred to as a processor) may provide a public network list including at least one entry. At block 809, processing circuitry 403 may provide a private network list including at least one identifier of a private network. The at least one identifier of the private network may include a Public Land Mobile Network PLMN identifier of the private network and at least one of a network identifier NID and a closed access group CAG identifier.

At block 811, processing circuitry 403 may broadcast the public network list and the private network list through transceiver 401 over a wireless interface. Broadcasting may include broadcasting the at least one identifier of the private network with at least one of a cell identifier associated with the at least one identifier of the private network and a tracking area code associated with the at least one identifier of the private network. For example, broadcasting may include broadcasting an indication that a cell associated with the PLMN identifier of the private network is reserved for other use. According to some embodiments, broadcasting may include broadcasting a system information block SIB (e.g., SIB1) including the public network list and the private network list.

The at least one identifier of the private network may include a first identifier of a first private network and a second identifier of a second private network. According to some embodiments, the first identifier of the first private network may include a first PLMN identifier of the first private network and a first NID, and the second identifier of the second private network may include a second PLMN identifier of the second private network and a second NID. According to some other embodiments, the first identifier of the first private network may include a first PLMN identifier of the first private network and a first CAG identifier, and the second identifier of the second private network may include a second PLMN identifier of the second private network and a second CAG identifier. In such embodiments, the first and second PLMN identifiers may be the same or different.

According to some embodiments broadcasting at block 811 may include broadcasting the private network list including the first identifier of the first private network and the second identifier of the second private network with at least one of a cell identifier associated with the first and second identifiers of the first and second private networks and a tracking area code associated with the first and second identifiers of the first and second private networks. According to some other embodiments, broadcasting at block 811 may include broadcasting the private network list including the first identifier of the first private network with at least one of a first cell identifier associated with the first identifier of the first private network and a first tracking area code associated with the first identifier of the first identifier of the first private network, and including the second identifier of the second private network with at least one of a second cell identifier associated with the second identifier of the second private network and a tracking area code associated with the second identifier of the second private network.

According to some embodiments, the at least one entry of the public network list may include a dummy identifier, such as a PLMN identifier that is reserved. According to some other embodiments, the at least one entry of the public network list may include a dummy identifier, and the PLMN identifier of the private network may be used as the dummy identifier in the public network list. In such embodiments, broadcasting at block 811 may include broadcasting an indication that a cell associated with the dummy identifier is reserved for other use.

According to some embodiments, the at least one entry of the public network list may include a public land mobile network PLMN identifier of a public network. In such embodiments, broadcasting at block 811 may include broadcasting the PLMN identifier of the public network with at least one of a cell identifier associated with the PLMN identifier of the public network and a tracking area code associated with the PLMN identifier of the public network.

Various operations from the flow chart of Figure 18 may be optional with respect to some embodiments of RAN nodes and related methods.

Reference is now made to Figure 19, which is a flow chart illustrating wireless device operations according to some embodiments of inventive concepts. Operations of the wireless device 300 (implemented using the structure of the block diagram of Figure 3) will now be discussed with reference to the flow chart of Figure 19 according to some embodiments of inventive concepts. For example, modules may be stored in memory 305 of Figure 5, and these modules may provide instructions so that when the instructions of a module are executed by respective wireless device processing circuitry 303, processing circuitry 303 performs respective operations of the flow chart.

At block 903, processing circuitry 303 (also referred to as a processor) may receive a broadcast (through transceiver 301) from a radio access node of a wireless communication network, and the broadcast may include a public network list including at least one entry and a private network list including at least one identifier of a private network. The at least one identifier of the private network may include a PLMN identifier of the private network and at least one of an NID and a CAG identifier. Moreover, the broadcast may include a system information block SIB (e.g., SIB1) including the public network list and the private network list.

At block 909, processing circuitry 303 may select a network from the public network list or the private network list based on an access mode of the wireless device. The access mode, for example, may be based on at least one of a capability of the wireless device, a configuration of the wireless device, and/or a desired service.

At block 911, processing circuitry 303 may perform at least one of: using the network selected from the public network list or the private network list; camping on the network selected from the public network list or the private network list; and/or accessing the network selected from the public network list or the private network list.

According to some embodiments, the broadcast may include the at least one identifier of the private network with at least one of a cell identifier associated with the at least one identifier of the private network and a tracking area code associated with the at least one identifier of the private network. According to some embodiments, the broadcast may include an indication that a cell associated with the PLMN identifier of the private network is reserved for other use.

The at least one identifier of the private network may include a first identifier of a first private network and a second identifier of a second private network. According to some embodiments, the first identifier of the first private network may include a first PLMN identifier of the first private network and a first NID, and the second identifier of the second private network may include a second PLMN identifier of the second private network and a second NID. According to some other embodiments, the first identifier of the first private network may include a first PLMN identifier of the first private network and a first CAG identifier, and the second identifier of the second private network may include a second PLMN identifier of the second private network and a second CAG identifier. The first and second PLMN identifiers may be the same or different.

According to some embodiments, the broadcast may include the private network list including the first identifier of the first private network and the second identifier of the second private network with at least one of a cell identifier associated with the first and second identifiers of the first and second private networks and a tracking area code associated with the first and second identifiers of the first and second private networks. According to some other embodiments, the broadcast may include the private network list including the first identifier of the first private network with at least one of a first cell identifier associated with the first identifier of the first private network and a first tracking area code associated with the first identifier of the first identifier of the first private network, and including the second identifier of the second private network with at least one of a second cell identifier associated with the second identifier of the second private network and a tracking area code associated with the second identifier of the second private network.

According to some embodiments, the at least one entry of the public network list may include a dummy identifier, such as a PLMN identifier that is reserved. According to such embodiments, the broadcast may include an indication for the public network list indicating that a cell of the public network list is reserved, the wireless device may be configured to access a private network, and selecting at block 909 may include ignoring the indication for the public network list indicating that the cell is reserved based on being configured to access a private network and selecting a private network based on the private network list. The broadcast may also include an indication for the private network list indicating that a cell of the private network list is reserved, and selecting at block 909 may further include ignoring the indication for the private network list indicating that the cell of the private network list is reserved. According to some other embodiments, the at least one entry of the public network list may include a dummy identifier, and the PLMN identifier of the private network may be used as the dummy identifier in the public network list. The broadcast may include an indication that a cell associated with the dummy identifier is reserved for other use.

According to some embodiments, the at least one entry of the public network list may include a PLMN identifier of a public network. For example, the broadcast may include the PLMN identifier of the public network with at least one of a cell identifier associated with the PLMN identifier of the public network and a tracking area code associated with the PLMN identifier of the public network.

According to some embodiments, the wireless device may be configured to access a private network, and selecting at block 909 may include ignoring the public network list and selecting a private network from the private network list based on being configured to access a private network.

Various operations from the flow chart of Figure 19 may be optional with respect to some embodiments of wireless devices and related methods.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 1x RTT: CDMA2000 1x Radio Transmission Technology
- 3GPP: 3rd Generation Partnership Project
- 5G: 5th Generation
- ABS: Almost Blank Subframe
- AMF: Access and Mobility Function
- ARQ: Automatic Repeat Request
- AS: Access Stratum
- AWGN: Additive White Gaussian Noise
- BCCH: Broadcast Control Channel
- BCH: Broadcast Channel
- CAG: Common Access Carrier
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRN: Human Readable Name
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MCC: Mobile Country Code
- MDT: Minimization of Drive Tests
- MIB: Master Information Block
- MME: Mobility Management Entity
- MNC: Mobile Network Code
- MSC: Mobile Switching Center
- N2: Interface between gNB and AMF
- NAS: Non-Access Stratum
- NG-RAN: Next Generation RAN
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System Information
- SIB: System Information Block
- SNR: Signal to Noise Ratio
- SON: Self Optimized Network
- SS: Synchronization Signal
- SSS: Secondary Synchronization Signal
- TAC: Tracking Area Code
- TDD: Time Division Duplex
- TDOA: Time Difference of Arrival
- TOA: Time of Arrival
- TSS: Tertiary Synchronization Signal
- TTI: Transmission Time Interval
- UAC: Unified Access Control
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

## Claims

1. A method of operating a base station (400) in a cell of a wireless communication network, the method comprising:
broadcasting (601), to a user equipment, UE (300), a first network list that includes a plurality of public network identifiers that correspond to public networks in the cell;
broadcasting (602), to the UE, a second network list that includes a plurality of non-public network, NPN, identifiers that correspond to NPNs in the cell;
wherein the each of the plurality of public network identifiers and NPN identifiers includes a plurality of data fields, and
wherein the network identifiers comprise a mobile country code, MCC, a mobile network code, MNC, a control access group, CAG, and a network identifier, NID.

2. The method of claim 1, wherein:
- the NPN comprises a stand-alone private network, SNPN, that is deployed separately from a public land mobile network, PLMN; or
- the NPN comprises an integrated private network, PNI-NPN, that is integrated with a public land mobile network, PLMN; or
- the cell of the wireless communication network corresponds to a public land mobile network, PLMN, cell or one of a PNI-NPN cell or a stand-alone private network, SNPN, cell: or
- the plurality of network identifiers that are broadcast comprise MCC =999 and MNC to prevent legacy and non-NPN UEs from selecting a public land mobile network, PLMN; or
- the plurality of network identifiers comprises the MCC, the MNC and a NID that corresponds to an operator public land mobile network, PLMN, and NID/CAG that indicates that an integrated private network, PNI-NPN, is available.

3. The method of claim 1, wherein the NPN comprises a stand-alone private network, SNPN, that is deployed separately from a public land mobile network, PLMN, and wherein:
- the network identifier comprises the PLMN and the NID responsive to a SNPN deployment; and/or
- the network identifier comprises the MMC, the MNC and the CAG responsive to an integrated private network, PNI-NPN, deployment, wherein, optionally, the second list comprises a bit that indicates whether the network identifier identifies a SNPN or PNI-NPN; and/or
- the PLMN comprises a dummy PLMN.

4. The method of claim 3, wherein the MCC is set at a value of 999.

5. The method of claim 1, wherein
the NPN comprises a stand-alone private network, SNPN, that is deployed separately from a public land mobile network, PLMN,
the NPN comprises an integrated private network, PNI-NPN, that is integrated with a PLMN, and
a PLMN identifier is common to the SNPN and the PNI-NPN.

6. The method of claim 1, wherein a cellReservedForOtherUse function prevents legacy and non-NPN UEs from selecting a public land mobile network, PLMN.

7. The method of claim 6, wherein a system information block , SIB, message comprises information for evaluating if a UE accesses cell and defines scheduling of system information,
wherein the SIB message comprises a field cell for storing CellAccessRelatedInfo-NPN that comprises a NPN list and a NPN specific version of the cellReservedForOtherUse indication.

8. The method of claim 7, wherein a NPN information element comprises an IE CellAccessRelatedInfo-NPN information element that indicates cell access related information and an npn-IdentityList and cellReservedForOtherUse-NPN information.

9. A base station (400) of a radio access network, wherein the base station is adapted to perform operations according to Claims 1 to 8.

10. A method of operating a wireless device (300) in a wireless communication network, the method comprising:
detecting (801) broadcasted information from a base station (400), the broadcasted information comprising:
a first network list that includes a plurality of public network identifiers that correspond to public networks in a cell; and
a second network list that includes a plurality of non-public network, NPN, identifiers that correspond to NPNs in the cell;
reading system information corresponding to broadcasts from the base station; and
determining whether the cell corresponding to the broadcasted information is available for access by the UE,
wherein the each of the plurality of public network identifiers and NPN identifiers includes a plurality of data fields, and
wherein the network identifiers comprise a mobile country code, MCC, a mobile network code, MNC, a control access group, CAG, and a network identifier, NID.

11. The method of claim 10, wherein the UE is not NPN capable,
wherein a UE access stratum, AS, layer is configured to report network identifiers to a UE non-access stratum, NAS layer for identified networks, and
wherein the UE is configured to receive a selected network identifier from the UE NAS layer, wherein, optionally, responsive to the MCC being 999, a corresponding network is not selected.

12. The method of claim 10, wherein the UE is NPN capable, and
wherein a UE access stratum, AS, layer is configured to report network identifiers to a UE non-access stratum, NAS layer for identified networks, wherein, optionally, the network identifiers comprise: MCC and MNC for public land mobile networks, PLMNs, MCC, MNC and NID for stand-alone private networks, SNPNs, and/or MCC, MNC and CAG for integrated private networks, PNI-NPNs.

13. The method of claim 12, wherein the UE is configured to receive a selected network identifier from the UE NAS layer.

14. The method of claim 10, wherein:
- the UE is NPN capable, wherein a UE access stratum, AS, layer is configured to report network identifiers to a UE non-access stratum, NAS, layer for identified networks, wherein the MCC value comprises 999, and wherein the UE NAS ignores networks corresponding to MCC value of 999; or
- the method further comprises performing, by a UE access stratum, AS, a search to identify available networks; and reporting the available networks to a UE NAS.

15. A wireless device (300) comprising:
a transceiver (1401) configured to provide wireless network communication with a wireless communication network; and
a processor (1403) coupled with the transceiver, wherein the processor is configured perform according to any of claims 10 to 14.

## Patentansprüche

1. Verfahren zum Betreiben einer Basisstation (400) in einer Zelle eines Drahtloskommunikationsnetzwerks, wobei das Verfahren umfasst:
Senden (601) einer ersten Netzwerkliste, die eine Mehrzahl von Kennungen öffentlicher Netzwerke umfasst, die öffentlichen Netzwerken in der Zelle entsprechen, per Broadcast an eine Benutzereinrichtung, UE, (300);
Senden (602) einer zweiten Netzwerkliste, die eine Mehrzahl von Kennungen nichtöffentlicher Netzwerke, NPN, umfasst, die NPNs in der Zelle entsprechen, per Broadcast an die UE;
wobei jede der Mehrzahl von Kennungen öffentlicher Netzwerke und der NPN-Kennungen eine Mehrzahl von Datenfeldern umfasst und
wobei die Netzwerkkennungen eine Mobilfunk-Landeskennzahl, MCC, eine Mobilfunk-Netzwerkkennzahl, MNC, eine Steuerungszugriffsgruppe, CAG, und eine Netzwerkkennung, NID, umfassen.

2. Verfahren nach Anspruch 1, wobei:
- das NPN ein eigenständiges privates Netzwerk, SNPN, umfasst, das getrennt von einem öffentlichen Landfunknetzwerk, PLMN, bereitgestellt wird; oder
- das NPN ein integriertes privates Netzwerk, PNI-NPN, umfasst, das in ein öffentliches Landfunknetzwerk, PLMN, integriert ist; oder
- die Zelle des Drahtloskommunikationsnetzwerks einer Zelle eines öffentlichen Landfunknetzwerks, PLMN, oder einer von einer PNI-NPN-Zelle oder einer Zelle eines eigenständigen privaten Netzwerks, SNPN, entspricht; oder
- die Mehrzahl von Netzwerkkennungen, die per Broadcast gesendet wird, MCC = 999 und MNC umfasst, um Legacy- und Nicht-NPN-UEs davon abzuhalten, ein öffentliches Landfunknetzwerk, PLMN, auszuwählen; oder
- die Mehrzahl von Netzwerkkennungen die MCC, die MNC und eine NID, die einem öffentlichen Landfunknetzwerk, PLMN, eines Betreibers entspricht, und eine NID/CAG umfasst, die anzeigt, dass ein integriertes privates Netzwerk, PNI-NPN, verfügbar ist.

3. Verfahren nach Anspruch 1, wobei das NPN ein eigenständiges privates Netzwerk, SNPN, umfasst, das getrennt von einem öffentlichen Landfunknetzwerk, PLMN, bereitgestellt wird, und wobei:
- die Netzwerkkennung in Reaktion auf eine SNPN-Bereitstellung das PLMN und die NID umfasst; und/oder
- die Netzwerkkennung in Reaktion auf eine Bereitstellung eines integrierten privaten Netzwerks, PNI-NPN, die MMC, die MNC und die CAG umfasst, wobei optional die zweite Liste ein Bit umfasst, das anzeigt, ob die Netzwerkkennung ein SNPN oder ein PNI-NPN identifiziert; und/oder
- das PLMN ein Dummy-PLMN umfasst.

4. Verfahren nach Anspruch 3, wobei die MCC auf einen Wert von 999 gesetzt wird.

5. Verfahren nach Anspruch 1, wobei
das NPN ein eigenständiges privates Netzwerk, SNPN, umfasst, das getrennt von einem öffentlichen Landfunknetzwerk, PLMN, bereitgestellt wird;
das NPN ein integriertes privates Netzwerk, PNI-NPN, umfasst, das in ein öffentliches Landfunknetzwerk, PLMN, integriert ist, und
eine PLMN-Kennung dem SNPN und dem PNI-NPN gemeinsam ist.

6. Verfahren nach Anspruch 1, wobei eine cellReservedForOtherUse-Funktion Legacy- und Nicht-NPN-UEs davon abhält, ein öffentliches Landfunknetzwerk, PLMN, auszuwählen.

7. Verfahren nach Anspruch 6, wobei eine Systeminformationsblock-,SIB-,Nachricht Informationen zum Beurteilen umfasst, ob eine UE Zugang zu einer Zelle erlangt, und Disposition von Systeminformationen definiert,
wobei die SIB-Nachricht eine Feldzelle zum Speichern von CellAccessRelatedlnfo-NPN umfasst, die eine NPN-Liste und eine NPN-spezifische Version der cellReservedForOtherUse-Anzeige umfasst.

8. Verfahren nach Anspruch 7, wobei ein NPN-Informationselement ein IE-CellAccessRelatedlnfo-NPN-Informationselement umfasst, das zellzugangsbezogene Informationen und eine npn-ldentitylist und cellReservedForOtherUse-NPN-Informationen anzeigt.

9. Basisstation (400) eines Funkzugangsnetzwerks, wobei die Basisstation zum Durchführen von Operationen nach einem der Ansprüche 1 bis 8 ausgelegt ist.

10. Verfahren zum Betreiben einer drahtlosen Vorrichtung (300) in einem Drahtloskommunikationsnetzwerk, wobei das Verfahren umfasst:
Erkennen (801) von per Broadcast gesendeten Informationen von einer Basisstation (400), wobei die per Broadcast gesendeten Informationen umfassen:
eine erste Netzwerkliste, die eine Mehrzahl von Kennungen öffentlicher Netzwerke umfasst, die öffentlichen Netzwerken in einer Zelle entsprechen;
eine zweite Netzwerkliste, die eine Mehrzahl von Kennungen nicht öffentlicher Netzwerke, NPN, umfasst, die NPNs in der Zelle entsprechen;
Auslesen von Systeminformationen, die den Broadcasts von der Basisstation entsprechen; und
Bestimmen, ob die Zelle, die den per Broadcast gesendeten Informationen entspricht, für Zugang durch die UE verfügbar ist,
wobei jede der Mehrzahl von Kennungen öffentlicher Netzwerke und der NPN-Kennungen eine Mehrzahl von Datenfeldern umfasst und
wobei die Netzwerkkennungen eine Mobilfunk-Landeskennzahl, MCC, eine Mobilfunk-Netzwerkkennzahl, MNC, eine Steuerungszugriffsgruppe, CAG, und eine Netzwerkkennung, NID, umfassen.

11. Verfahren nach Anspruch 10, wobei die UE nicht-NPN-fähig ist,
wobei eine UE-Access-Stratum,-AS-,Schicht zum Melden von Netzwerkkennungen an eine UE-Non-Access-Stratum,-NAS-,Schicht für identifizierte Netzwerke konfiguriert ist, und
wobei die UE zum Empfangen einer Kennung eines ausgewählten Netzwerks von der UE-NAS-Schicht konfiguriert ist, wobei optional in Reaktion darauf, dass die MCC 999 ist, ein entsprechendes Netzwerk nicht ausgewählt wird.

12. Verfahren nach Anspruch 10, wobei die UE NPN-fähig ist, und
wobei eine UE-Access-Stratum-,AS-,Schicht zum Melden von Netzwerkkennungen an eine UE-Nicht-Access-Stratum-,NAS-,Schicht für identifizierte Netzwerke konfiguriert ist, wobei optional die Netzwerkkennungen umfassen: MCC und MNC für öffentliche Landfunknetzwerke, PLMNs, MCC, MNC und NID für eigenständige private Netzwerke, SNPNs, und/oder MCC, MNC und CAG für integrierte private Netzwerke, PNI-NPNs.

13. Verfahren nach Anspruch 12, wobei die UE zum Empfangen einer Kennung eines ausgewählten Netzwerks von der UE-NAS-Schicht konfiguriert ist.

14. Verfahren nach Anspruch 10, wobei:
- die UE NPN-fähig ist, wobei eine UE-Access-Stratum-,AS-,Schicht zum Melden von Netzwerkkennungen an eine UE-Nicht-Access-Stratum-,NAS-,Schicht für identifizierte Netzwerke konfiguriert ist, wobei der MCC-Wert 999 umfasst und wobei die UE-NAS Netzwerke ignoriert, die dem MCC-Wert von 999 entsprechen; oder
- das Verfahren ferner ein Durchführen einer Suche durch eine UE-Access-Stratum, AS, zum Identifizieren verfügbarer Netzwerke und Melden der verfügbaren Netzwerke an eine UE-NAS umfasst.

15. Drahtlose Vorrichtung (300), umfassend:
einen Sendeempfänger (1401), der zum Bereitstellen von Drahtlosnetzwerkkommunikation mit einem Drahtloskommunikationsnetzwerk konfiguriert ist; und
einen Prozessor (1403), der mit dem Sendeempfänger gekoppelt ist, wobei der Prozessor zum Ausführen nach einem der Ansprüche 10 bis 14 konfiguriert ist.

## Revendications

1. Procédé de fonctionnement d'une station de base (400) dans une cellule d'un réseau de communication sans fil, le procédé comprenant :
la diffusion (601), à un équipement utilisateur, UE (300), d'une première liste de réseaux qui inclut une pluralité d'identifiants de réseaux publics correspondant à des réseaux publics dans la cellule ;
la diffusion (602), à l'UE, d'une deuxième liste de réseaux qui inclut une pluralité d'identifiants de réseaux non publics, NPN, correspondant à des NPN dans la cellule ;
dans lequel chacun de la pluralité d'identifiants de réseaux publics et d'identifiants de NPN inclut une pluralité de champs de données, et
dans lequel les identifiants de réseaux comprennent un code de pays mobile, MCC, un code de réseau mobile, MNC, un groupe d'accès de commande, CAG, et un identifiant de réseau, NID.

2. Procédé selon la revendication 1, dans lequel :
- le NPN comprend un réseau privé autonome, SNPN, qui est déployé séparément d'un réseau mobile terrestre public, PLMN ; ou
- le NPN comprend un réseau privé intégré, PNI-NPN, qui est intégré au réseau mobile terrestre public, PLMN ; ou
- la cellule du réseau de communication sans fil correspond à une cellule de réseau mobile terrestre public, PLMN, ou à l'une d'une cellule PNI-NPN ou d'une cellule de réseau privé autonome, SNPN ; ou
- la pluralité d'identifiants de réseaux qui sont diffusés comprend MCC = 999 et MNC pour empêcher que des UE existants et non NPN ne sélectionnent un réseau mobile terrestre public, PLMN ; ou
- la pluralité d'identifiants de réseaux comprend le MCC, le MNC et un NID correspondant à un réseau mobile terrestre public, PLMN, d'opérateur et un NID/CAG indiquant qu'un réseau privé intégré, PNI-NPN, est disponible.

3. Procédé selon la revendication 1, dans lequel le NPN comprend un réseau privé autonome, SNPN, qui est déployé séparément d'un réseau mobile terrestre public, PLMN, et dans lequel :
- l'identifiant de réseau comprend le PLMN et le NID en réponse à un déploiement de SNPN ; et/ou
- l'identifiant de réseau comprend le MMC, le MNC et le CAG en réponse à un déploiement de réseau privé intégré, PNI-NPN, dans lequel, facultativement, la deuxième liste comprend un bit indiquant si l'identifiant de réseau identifie un SNPN ou un PNI-NPN ; et/ou
- le PLMN comprend un PLMN fictif.

4. Procédé selon la revendication 3, dans lequel le MCC est réglé à une valeur de 999.

5. Procédé selon la revendication 1, dans lequel le NPN comprend un réseau privé autonome, SNPN, qui est déployé séparément d'un réseau mobile terrestre public, PLMN,
le NPN comprend un réseau privé intégré, PNI-NPN, qui est intégré à un PLMN, et
un identifiant de PLMN est commun au SNPN et au PNI-NPN.

6. Procédé selon la revendication 1, dans lequel une fonction cellReservedForOtherUse empêche que des UE existants et non NPN ne sélectionnent un réseau mobile terrestre public, PLMN.

7. Procédé selon la revendication 6, dans lequel un message de bloc d'informations système, SIB, comprend des informations pour évaluer si un UE accède à une cellule et définit une planification d'informations système,
dans lequel le message SIB comprend une cellule de champ pour stocker des CellAccessRelatedInfo-NPN comprenant une liste de NPN et une version spécifique au NPN de l'indication cellReservedForOtherUse.

8. Procédé selon la revendication 7, dans lequel un élément d'information NPN comprend un élément d'information IE CellAccessRelatedInfo-NPN indiquant des informations liées à un accès à une cellule et des informations npn-IdentityList et cellReservedForOtherUse-NPN.

9. Station de base (400) d'un réseau d'accès radio, dans laquelle la station de base est apte à réaliser des opérations selon les revendications 1 à 8.

10. Procédé de fonctionnement d'un dispositif sans fil (300) dans un réseau de communication sans fil, le procédé comprenant :
la détection (801) d'informations diffusées depuis une station de base (400), les informations diffusées comprenant :
une première liste de réseaux qui inclut une pluralité d'identifiants de réseaux publics correspondant à des réseaux publics dans une cellule ; et
une deuxième liste de réseaux qui inclut une pluralité d'identifiants de réseaux non publics, NPN, correspondant à des NPN dans la cellule ;
la lecture d'informations système correspondant à des diffusions depuis la station de base ; et
la détermination si la cellule correspondant aux informations diffusées est disponible pour un accès par l'UE,
dans lequel chacun de la pluralité d'identifiants de réseaux publics et d'identifiants de NPN inclut une pluralité de champs de données, et
dans lequel les identifiants de réseaux comprennent un code de pays mobile, MCC, un code de réseau mobile, MNC, un groupe d'accès de commande, CAG, et un identifiant de réseau, NID.

11. Procédé selon la revendication 10, dans lequel l'UE n'a pas de capacité de NPN,
dans lequel une couche de strate d'accès, AS, d'UE est configurée pour rapporter des identifiants de réseaux à une couche de strate sans accès, NAS, d'UE pour des réseaux identifiés, et
dans lequel l'UE est configuré pour recevoir un identifiant de réseau sélectionné depuis la couche de NAS d'UE, dans lequel, facultativement, en réponse au fait que le MCC est 999, un réseau correspondant n'est pas sélectionné.

12. Procédé selon la revendication 10, dans lequel l'UE n'a pas de capacité de NPN, et
dans lequel une couche de strate d'accès, AS, d'UE est configurée pour rapporter des identifiants de réseaux à une couche de strate sans accès, NAS, d'UE pour des réseaux identifiés, dans lequel, facultativement, les identifiants de réseaux comprennent : MCC et MNC pour des réseaux mobiles terrestres publiques, PLMN, MCC, MNC et NID pour des réseaux privés autonomes, SNPN, et/ou MCC, MNC et CAG pour des réseaux privés intégrés, PNI-NPN.

13. Procédé selon la revendication 12, dans lequel l'UE est configuré pour recevoir un identifiant de réseau sélectionné depuis la couche de NAS d'UE.

14. Procédé selon la revendication 10, dans lequel :
- l'UE a une capacité de NPN, dans lequel une couche de strate d'accès, AS, d'UE est configurée pour rapporter des identifiants de réseaux à une couche de strate sans accès, NAS, d'UE pour des réseaux identifiés, dans lequel la valeur de MCC comprend 999, et dans lequel la NAS d'UE ignore des réseaux correspondant à une valeur de MCC de 999 ; ou
- le procédé comprend en outre la réalisation, par une strate d'accès, AS, d'UE, d'une recherche pour identifier des réseaux disponibles ; et le rapport des réseaux disponibles à une NAS d'UE.

15. Dispositif sans fil (300) comprenant :
un émetteur-récepteur (1401) configuré pour fournir une communication de réseau sans fil avec un réseau de communication sans fil ; et
un processeur (1403) couplé à l'émetteur-récepteur, dans lequel le processeur est configuré pour réaliser des opérations selon l'une quelconque des revendications 10 à 14.
